## Europäisches Patentamt

## European Patent Office

## Office européen des brevets

(19)

(11) Veröffentlichungsnummer: **0 239 023**
**B1**

(12)

# EUROPÄISCHE PATENTSCHRIFT

(45) Veröffentlichungstag der Patentschrift:
17.10.90

(51) Int. Cl.⁵: **G06F 9/38**

(21) Anmeldenummer: 87104112.5

(22) Anmeldetag: 20.03.87

(54) Anordnung zur Bearbeitung von Sprungbefehlen innach dem Fliessbandprinzip arbeitenden Datenverarbeitungsanlagen.

(30) Priorität: 21.03.86 DE 3609714

(73) Patentinhaber: Siemens Aktiengesellschaft,
Wittelsbacherplatz 2, D-8000 München 2(DE)

(43) Veröffentlichungstag der Anmeldung:
30.09.87 Patentblatt 87/40

(72) Erfinder: Kern, Rolf, Dipl.-Ing., Goethering 44,
D-8018 Grafing(DE)

(45) Bekanntmachung des Hinweises auf die Patenterteilung:
17.10.90 Patentblatt 90/42

(84) Benannte Vertragsstaaten:
AT BE CH DE FR GB IT LI NL SE

(56) Entgegenhaltungen: (Fortsetzung)
prediction strategies and branch target buffer design"
IBM TECHNICAL DISCLOSURE BULLETIN, Band 13,
Nr. 12, Mai 1971, Seiten 3732-3733, New York, US; T.A.
ENGER: "Fast branch decision"

(56) Entgegenhaltungen:
PATENT ABSTRACTS OF JAPAN, Band 7,
Nr. 282 (P-243)[1427], 16. Dezember 1983; &
JP-A-58 158 745 (NIPPON DENKI K.K.) 21-09-1983
PATENT ABSTRACTS OF JAPAN, Band 6,
Nr. 255 (P-162)[1133], 14. Dezember 1982; &
JP-A-57 150 040 (MITSUBISHI DENKI K.K.) 16-09-1982
6TH ANNUAL SYMPOSIUM ON COMPUTER
ARCHITECTURE, 23.-25. April 1979, Seiten 216-231,
IEEE, New York, US; W.G. ROSOCHA et al.:
"Performance enhancement of SISD processors"
IBM TECHNICAL DISCLOSURE BULLETIN, Band 24,
Nr. 4, September 1981, Seiten 1857-1858, New York, US;
J.F. HUGHES: "Branch on condition decoding with
instruction queues empty"
COMPUTER, Band 17, Nr. 1, Januar 1984, Seiten 6-22,
IEEE, Long Beach, US; J.K.F. LEE et al.: "Branch

## Beschreibung

Die Erfindung betrifft eine Anordnung zur Bearbeitung von Sprungbefehlen in nach dem Fließbandprinzip arbeitenden Datenverarbeitungsanlagen gemäß dem Oberbegriff des Patentanspruches 1 oder 2.

Bei der Bearbeitung von Befehlsfolgen nach dem Fließbandprinzip schaffen Sprungbefehle bekanntlich erhebliche Probleme, da sie die Arbeitsfolge der Befehle unvorhersehbar beeinflussen und durch verursachte Wartezyklen die Leistungsfähigkeit der Datenverarbeitungsanlage beeinträchtigen. Es sind daher besondere Vorkehrungen zu treffen, damit die Bereitstellung des auf den Sprungbefehl folgenden Befehls möglichst frühzeitig getroffen werden kann, zumal Sprungbefehle sehr häufig in Befehlsfolgen auftreten.

Bei unbedingten Sprungbefehlen kann die Entscheidung über den Folgebefehl unmittelbar nach Interpretation des Sprungbefehles getroffen werden, weil die von den Vorläuferbefehlen gesetzte Anzeige dabei keine Rolle spielt.

Bei bedingten Sprungbefehlen ist dagegen die Entscheidung über den Folgebefehl von der nach Ausführung des Vorläuferbefehls sich ergebenden Anzeige abhängig, so daß im Falle eines erfüllten bedingten Sprungbefehles zwangsläufig Wartezyklen für die Befehlsausführungsstufe entstehen, bis der erste Befehl der Verzweigungsrichtung aufbereitet ist und zur Ausführung bereitsteht.

Ausgehend von der Tatsache, daß nicht alle Befehle die bereits bestehende Anzeige verändern und dies bei der Interpretation der Befehle bereits erkennbar ist, und ausgehend von der Tatsache, daß sich mehrere solcher Befehle aufeinanderfolgend in der Aufbereitung befinden können, so daß die bei der Interpretation eines nachfolgenden bedingten Sprungbefehles bereits vorliegende Anzeige nicht mehr geändert wird, besteht daher die Möglichkeit, auch bei bedingten Sprungbefehlen bereits in der Interpretationsphase eine Entscheidung darüber zu treffen, mit welchem Befehl die Befehlsverarbeitung nach dem bedingten Sprungbefehl fortzusetzen ist. Der bedingte Sprungbefehl kann in diesem Falle wie ein unbedingter Sprungbefehl behandelt werden und die entsprechenden Steuerungsabläufe auslösen. Voraussetzung dafür aber ist, daß die bei der Befehlsinterpretation jeweils gewonnenen Anzeigenänderungshinweise bis zur Ausführung des zugehörigen Befehls gespeichert und überwacht werden.

Beispiele für eine derartige Lösung finden sich z.B. in IBM-Technical Disclosure Bulletin, Band 24, Nr. 4, September 1981, Seiten 1857 - 1858 oder in der am 21.09.83 offengelegten jap. Patentanmeldung 58-158 745.

Im einen Falle werden die Änderungshinweise zusammen mit den interpretierten Befehlen in einer Befehlswarteschlange bis zur Ausführung des Befehls gespeichert. Ist daher die Befehlswarteschlange leer oder kein Änderungshinweis darin enthalten, wird die bestehende Anzeige für gültig erklärt und bereits in der Interpretationsphase des Befehles anhand der Befehlsmaske geprüft, ob die Sprungbedingung erfüllt ist oder nicht. Bei erfüllter Sprungbedingung wird die Befehlsaufbereitung mit dem ersten Befehl der Verzweigungsfolge und im anderen Falle mit dem folgenden linearen Befehl fortgeführt.

Bei der Lösung nach der genannten jap. Offenlegungsschrift sind jeder Verarbeitungsstufe ab der Interpretationsstufe eine Einrichtung zur Ermittlung der Anzeige für vorgegebene Befehle und zwei Speicherelemente zur Kennzeichnung, ob die jeweils erzeugte Anzeige bereits endgültig ist oder noch verändert werden kann, in Verbindung mit einer gemeinsamen Einrichtung zur Auswertung all dieser Signale vorgesehen, wobei der Änderungshinweis mit dem Befehl von Stufe zu Stufe weitergereicht wird. Dadurch kann nicht nur in der Interpretationsphase, sondern auch in den nachfolgenden Bearbeitungsphasen eines bedingten Sprungbefehles auf die gültig werdende Anzeige reagiert werden.

Im übrigen arbeitet diese Anordnung in der Weise, daß nach Interpretation eines bedingten Sprungbefehles die Interpretation von Folgebefehlen gestoppt wird, bis die Entscheidung über den Folgebefehl anhand der Anzeige möglich ist. Wird demzufolge die gültige Anzeige erst von der Befehlsausführungsstufe geliefert, ergeben sich mehrere Wartezyklen. Diese Anzahl verringert sich aber, wenn die endgültige Anzeige schon von einer früheren Verarbeitungsstufe geliefert werden kann.

Günstiger gestalten sich die Verhältnisse, wenn nach der Interpretation eines Sprungbefehles wenigstens noch ein weiterer Befehl der linearen Befehlsfolge interpretiert wird, also der Aufbereitung zugeführt wird, und parallel dazu in der Adressenrechnungsstufe die Adresse für den ersten Befehl der möglichen Verzweigungsrichtung berechnet und dieser im darauffolgenden Arbeitszyklus vorsorglich gelesen wird. Dieser Steuerungsablauf liegt der Lösung entsprechend der genannten IBM-Druckschrift zugrunde. Sie hat den Vorteil, daß bei bedingten Sprungbefehlen ohne vorzeitige Entscheidung insgesamt weniger Verlustzyklen anfallen, als bei der Lösung nach der jap. Offenlegungsschrift, wenn dort die Entscheidung erst bei Ausführung des Vorläuferbefehls fällt. Andererseits können bereits in der Aufbereitung befindliche Befehle der linearen Befehlsfolge mit ihren Anzeigenänderungshinweisen im Verzweigungsfall durch Rücksetzen der Register in einfacher Weise gelöscht werden.

Darüberhinaus läßt sich die Anzahl der im Durchschnitt anfallenden Warte- oder Verlustzyklen prinzipiell verringern, wenn zusätzlich mit dem vorsorglichen Lesen des ersten Befehls der Verzweigungsrichtung die Interpretation linearer Folgebefehle eingestellt und stattdessen bei ausstehender Entscheidung der neu gelesene erste Befehl auch interpretiert wird. Dies ist möglich, weil eine Verzögerung der Entscheidung sich zwangsläufig ergibt, wenn der Vorläuferbefehl mehr als einen Arbeitszyklus zur Ausführung benötigt. Der Vorteil eines solchen Steuerungsablaufs ergibt sich insgesamt daraus, daß in vielen Befehlsfolgen ein großer Teil der auszuführenden Befehle mehrere Arbeitszyklen zur Ausführung benötigt, der überwiegende Teil der bedingten Sprungbefehle erfüllt und die Anzahl der als unbedingte Sprungbefehle behandelbaren bedingten Sprungbefehle gering ist. Von Nachteil ist jedoch, daß sich gleichzeitig Befehle der linearen Befehlsfolge und der Verzweigungsrichtung in der Aufbereitung befinden können.

Aufgabe der Erfindung ist es daher, eine Anordnung zu schaffen, die ausgehend von dem Prinzip der Überwachung der ermittelten Anzeigeänderungshinweise und der Behandlung von bedingten Sprungbefehlen wie unbedingte Sprungbefehle bei in der Interpretationsphase bereits feststehender unveränderbarer Anzeige auch bei einem Steuerungsablauf mit möglicher Belegung des Aufbereitungsfließbandes mit Folgebefehlen zweier verschiedener Befehlszweige eine eindeutige Auswahl der jeweils gültigen Anzeigenänderungshinweise ermöglicht.

Diese Aufgabe wird einerseits durch die Merkmale des Patentanspruches 1 gelöst. Hiernach sind die die einzelnen Anzeigenänderungshinweise aufnehmenden Speicherelemente den einzelnen, nach der Interpretation noch in den nachfolgenden Bearbeitungsstufen befindlichen Befehlen zugeordnet. Die Zuordnung erfolgt durch einen zyklisch arbeitenden Auswahlzähler. Dabei sind die Ladezeitpunkte und die zeitlichen Gültigkeitsbereiche der gespeicherten Anzeigenänderungshinweise logisch voneinander getrennt. Dies wird durch die gesonderten individuellen Gültigkeitszähler in Verbindung mit einem gemeinsamen Vorlaufzähler sichergestellt, der jeweils die Anzahl der noch auszuführenden Vorläuferbefehle anzeigt. Die erforderlichen Steuersignale liefert eine vorgeschaltete Steuereinrichtung, die die den Fortgang der Fließbandbearbeitung anzeigenden Steuersignale in Verbindung mit den die tatsächliche Ausführung eines Sprungbefehles betreffenden Signalen auswertet. Ein Anzeigenänderungshinweis zu vorsorglich interpretierten Befehlen kann so in eines der Speicherelemente geladen werden, ohne daß der Änderungshinweis zugleich gültig wird. Auch kann ein abgespeicherter Anzeigenänderungshinweis durch den eines anderen Befehls ersetzt werden, ohne daß der alte Änderungshinweis gültig geworden ist. Ebenso kann in einfacher Weise die vorzeitige Übernahme eines Anzeigenänderungshinweises, die zur Verdrängung eines noch benötigten Änderungshinweises führen würde, verhindert werden.

Eine andere Lösung der gestellten Aufgabe ergibt sich aus den Merkmalen des Patentanspruches 2. Hiernach sind die die einzelnen Anzeigenänderungshinweise aufnehmenden Speicherelemente den auf die Interpretationsstufe folgenden relevanten Verarbeitungsstufen zugeordnet, und die einzelnen Anzeigenänderungshinweise werden entsprechend dem Verarbeitungsfortgang der zugehörigen Befehle von Speicherelement zu Speicherelement weitergereicht. Durch ein Speicherelementenpaar als Eingangsstufe der Schiebekette können vorsorglich Anzeigenänderungshinweise zu Befehlen zweier Befehlsrichtungen gespeichert werden, von denen dann der jeweils gültige nach der Entscheidung weitergeleitet wird. Die benötigten Steuersignale liefert auch hierbei eine in gleicher Weise wie bei der anderen Lösung arbeitende Steuereinrichtung, deren grundsätzlicher Aufbau sich aus den Merkmalen des Patentanspruches 3 ergibt.

Einzelheiten der Erfindung seien nachfolgend anhand von in der Zeichnung dargestellten Ausführungsbeispielen näher erläutert. Im einzelnen zeigen

Fig. 1 Ablaufdiagramme für die Befehlsbearbeitung in den einzelnen Fließbandstufen zur Erläuterung der Verlustzeiten bei nicht erfüllten bzw. erfüllten unbedingten und bedingten Sprungbefehlen,

Fig. 2 ein schematisches Blockschaltbild für die Verarbeitung von Sprungbefehlen gemäß der Erfindung,

Fig. 3 den Aufbau von zwei üblicherweise verwendeten bedingten Sprungbefehlen,

Fig. 4 ein Blockschaltbild der Sprungbefehlsauswerteeinrichtung von Fig. 2,

Fig. 5A und 5B ein Blockschaltbild der Anzeigeüberwachungseinrichtung von Fig. 2,

Fig. 6 ein Ablauf- und Impulsdiagramm für die Anzeigenüberwachungseinrichtung von Fig. 5 bei Auftreten eines nicht erfüllten bedingten Sprungbefehles,

Fig. 7 ein Ablauf- und Impulsdiagramm für die Anzeigenüberwachungseinrichtung von Fig. 5 bei Auftreten eines erfüllten bedingten Sprungbefehles,

Fig. 8 ein Blockschaltbild einer weiteren Ausführungsform der Anzeigenüberwachungseinrichtung von Fig. 2,

Fig. 9 ein Ablauf- und Impulsdiagramm für die Anzeigenüberwachungseinrichtung von Fig. 8 bei Auftreten eines nicht erfüllten bedingten Sprungbefehles und

Fig. 10 ein Ablauf- und Impulsdiagramm für die Anzeigenüberwachungseinrichtung von Fig. 8 bei Auftreten eines erfüllten bedingten Sprungbefehles.

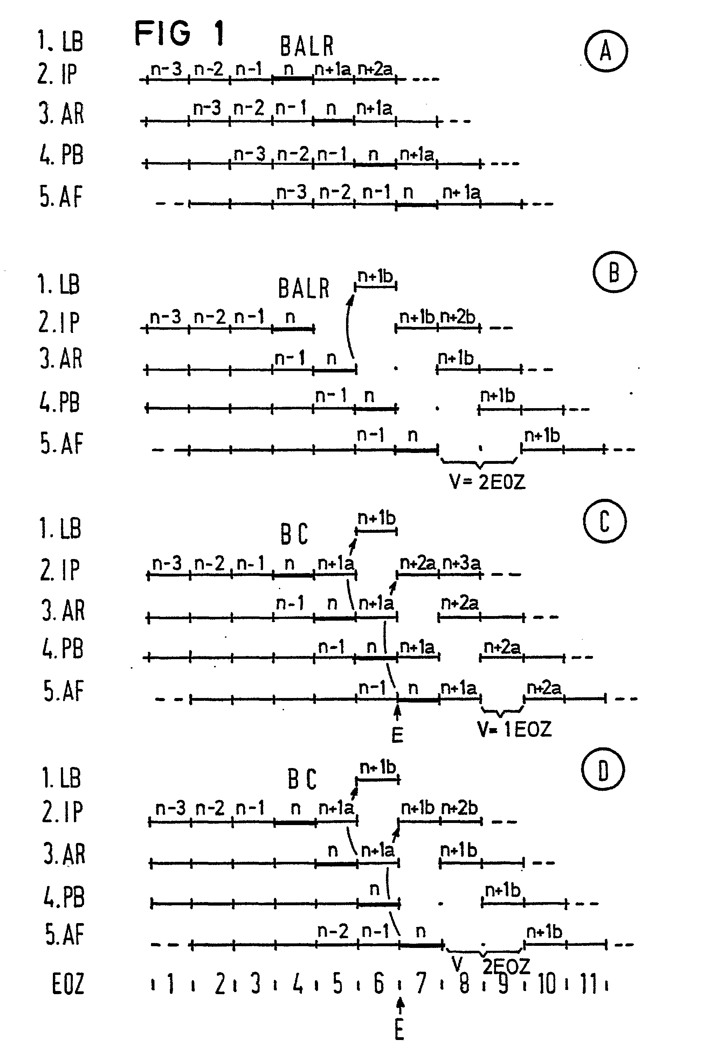

Die Ablaufdiagramme A bis D von Fig. 1 zeigen jeweils die Ablauffolgen der Befehle n-3 bis n+2a bzw. n+2b während der Arbeitszyklen EOZ1 bis 11 des Fließbandes in den einzelnen Verarbeitungsstufen 1 bis 5, die sich auf das Lesen der Befehle (LB), auf die Befehlsinterpretation (IP), auf die Adressenrechnung (AR), auf die Parameterbereitstellung (PB) und auf die Befehlsausführung (AF) beziehen. In allen Ablaufdiagrammen A bis D ist der Befehl n ein Sprungbefehl, was zusätzlich durch die größere Strichstärke hervorgehoben ist. Es handelt sich dabei um einen unbedingten Sprungbefehl BALR bei den beiden Ablaufdiagrammen A und B, sowie um einen bedingten Sprungbefehl BC bei den beiden unteren Ablaufdiagrammen C und D.

Beim unbedingten Sprungbefehl BALR steht spätestens am Ende der Interpretationsphase am Ende des Zyklus EOZ4 fest, ob der Sprung erfüllt ist oder nicht. Bei nicht erfülltem unbedingten Sprungbefehl wird gemäß dem Ablaufdiagramm A die Befehlsfolge linear mit dem nächsten Befehl n+1a fortgesetzt, als ob kein Sprungbefehl vorgelegen hat.

Beim erfüllten unbedingten Sprungbefehl wird dagegen die Interpretation des linear auf den Sprungbefehl n folgendem Befehles n+1a im Arbeitszyklus EOZ5 unterdrückt, und es wird nach Berechnung der Sprungadresse im selben Arbeitszyklus durch die Stufe 3 im nachfolenden Arbeitszyklus E0Z6 parallel zur Übergabe der Sprungsbefehlsparameter in der Stufe 4 das Lesen des ersten Befehlsblockes mit der berechneten Sprungadresse in Stufe 1 angestoßen, was durch den ersten Befehl n+1b der Verzweigungsrichtung in Stufe 1 schematisch angedeutet ist. Dieser Befehl wird dann stufenweise mit jedem Arbeitszyklus weitergeleitet, bis er im Arbeitszyklus EOZ10 in Stufe 5 zur Ausführung gelangt. Dies bedingt nach Ausführung des Befehles n im Arbeitszyklus EOZ7 einen Verlust V von zwei Arbeitszyklen in der Befehlsausführungsstufe 5.

Beim bedingten Sprungbefehl n kann die Entscheidung, ob der Sprung erfüllt ist oder nicht, erst nach Ausführung des vorangehenden Befehls n-1 in Stufe 5 abhängig von der damit verbundenen Anzeige getroffen werden, also am Ende des Arbeitszyklus EOZ6, was durch einen mit E bezeichneten Pfeil angedeutet ist.

Nach Interpretation des Befehles n im Arbeitszyklus EOZ4 wird daher im Arbeitszyklus EOZ5 zunächst der linear folgende Befehl n+1a interpretiert und im nachfolgenden Zyklus EOZ6 nach der Adressenberechnung in Stufe 3 der Befehlsblock für die Verzweigungsrichtung von Stufe 1 auf Verdacht gelesen. Am Ende des Arbeitszyklus EOZ6, was mit dem Pfeil E angedeutet ist, entscheidet sich dann, welche Verzweigungsrichtung einzuschlagen und welcher Befehl als nächster zu interpretieren ist.

Beim nicht erfüllten bedingten Sprungbefehl gemäß dem Ablaufdiagramm C wird, da der erste Befehl n+1a der linearen Folge bereits interpretiert und an die nächste Stufe 3 weitergeleitet worden ist, der Folgebefehl n+2a in Stufe 2 während des Arbeitszyklus E0Z7 interpretiert, während der Vorgängerbefehl n+1a in der üblichen Weise weiterbehandelt wird. Durch das Aussetzen der Interpretation für den Befehl n+2a im Arbeitszyklus EOZ6 entsteht ein Ausführungsverlust V von einem Arbeitszyklus EOZ.

Beim erfüllten bedingten Sprungbefehl gemäß dem Ablaufdiagramm D wird dagegen im Zyklus EOZ7 der erste Befehl n+1b der neuen Verzweigungsrichtung in Stufe 2 interpretiert und die Weiterbehandlung des Befehles n+1a von der Stufe 4 an abgebrochen. Nach Ausführung des Sprungbefehls n ergibt sich daher ein Verlust V von zwei Arbeitszyklen EOZ, bis der Folgebefehl n+1b alle Bearbeitungsstufen des Fließbandes durchlaufen hat und für die Ausführung im Arbeitszyklus EOZ10 bereit steht.

Ein Vergleich der Ablaufdiagramme A und C zeigt, daß bei einem nicht erfüllten bedingten Sprungbefehl gegenüber einem nicht erfüllten unbedingtem Sprungbefehl ein Verlust von jeweils einem Arbeitszyklus EOZ gegeben ist, während bei erfüllten Sprungbefehlen unabhängig davon, ob sie unbedingt oder bedingt sind, die Ausführungsverluste V gleich groß sind und im vorliegenden Falle einheitlich zwei Arbeitszyklen EOZ betragen. Das gilt bezüglich der nicht erfüllten Sprungbefehle unabhängig davon, ob die Ausführungsdauer eines Befehles nur jeweils einen Arbeitszyklus - wie im vorliegenden Falle der Einfachheit halber unterstellt worden ist - oder aber mehrere Arbeitszyklen EOZ umfaßt.

Der Unterschied bei den nicht erfüllten Sprungbefehlen resultiert daraus, daß beim unbedingten Sprungbefehl BALR bereits am Ende der Interpretationsphase für den Sprungbefehl n im Arbeitszyklus EOZ4 entschieden werden kann, ob der Sprung erfüllt ist oder nicht, während beim bedingten Sprungbefehl diese Entscheidung erst am Ende des Arbeitszyklus EOZ6 getroffen werden kann, wenn die Anzeige aus der Verarbeitung des Vorgängerbefehles n-1 vorliegt.

Könnte daher bereits zum Ende des Arbeitszyklus EOZ4 eine Aussage darüber getroffen werden, daß die sich in der Fließbandbearbeitung befindlichen, aber noch nicht ausgeführten Vorgängerbefehle n-3, n-2 und n-1 die bestehende Anzeige bis zur Ausführung des Sprungbefehles n im Arbeitszyklus EOZ7 nicht mehr verändern, dann ließe sich bei nicht mehr veränderbarer Anzeige ein bedingter Sprungbefehl wie ein unbedingter Sprungbefehl behandeln. Die notwendige Prüfung, ob der Sprung erfüllt ist oder nicht, nämlich der Vergleich zwischen Maske und Anzeige, könnte dann bereits zu diesem frühen Zeitpunkt durchgeführt werden. Bei jedem bedingten Sprungbefehl, der wegen der bereits gültigen Anzeige als unbedingter Sprungbefehl behandelt werden kann und dessen Sprungbedingung nicht erfüllt ist, wird ein sonst notwendiger Wartezyklus in der Ausführungsstufe vermieden.

Eine Aussage, ob die Anzeige durch die Ausführung des zugehörigen Befehles verändert werden kann oder nicht, ist ohne weiteres in der Interpretationsphase anhand eines jeden Befehles möglich. Man braucht die dabei gewonnenen Anzeigenänderungshinweise lediglich vorübergehend zu speichern und bei der Befehlsinterpretation eines Sprungbefehles zu berücksichtigen. Ergeben die Anzeigenänderungshinweise, daß die Anzeige noch verändert werden kann, dann wird der bedingte Sprungbefehl in der üblichen Weise als solcher behandelt.

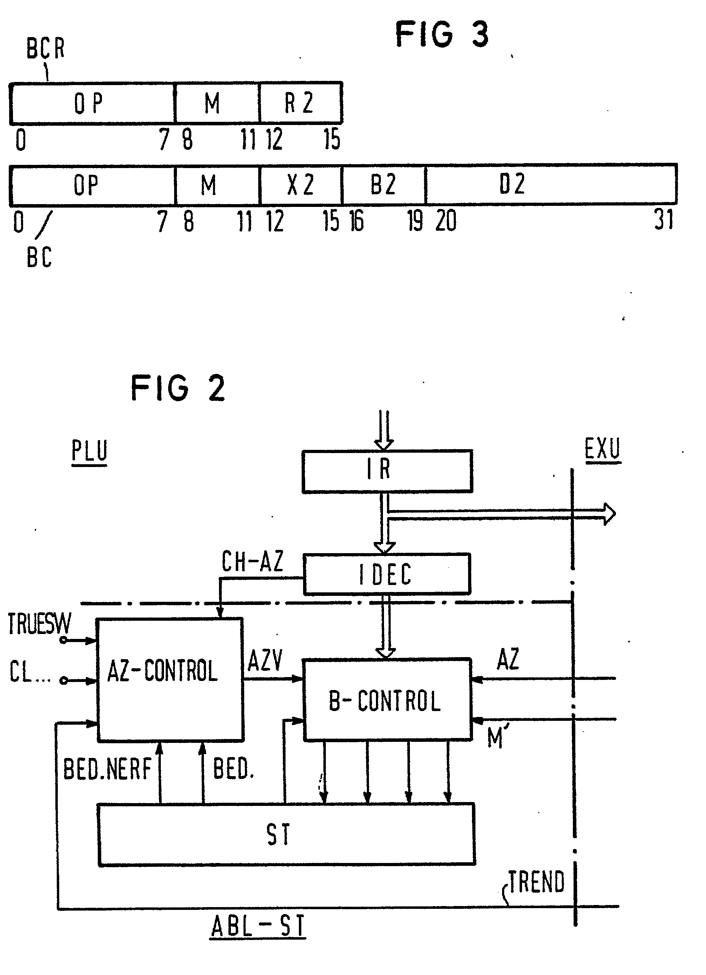

Fig. 2 zeigt ein schematisches Blockschaltbild der entspechend der Erfindung erweiterten und für die Verarbeitung von Sprungbefehlen notwendigen Anlagenteile einer nach dem Fließbandprinzip arbeitenden Datenverarbeitungsanlage mit einem die Fließbandstufen 1 bis 4 beinhaltenden Befehlsaufbereitungsprozessors PLU und einem die Ausführungsstufe 5 bildenden Befehlsausführungsprozessor EXU. Ein in der Stufe 1 in an sich bekannte Weise, beispielsweise in einem Pufferspeicher, bereitgestellter Befehl wird für die Interpretation in der Stufe 2 in ein Befehlesregister IR übernommen und von einer angeschlossenen Decodiereinrichtung IDEC in herkömmlicher Weise decodiert, um die Steuersignale für die nachfolgenden Verarbeitungsstufen zu erzeugen, die im einzelnen nicht dargestellt sind und in herkömmlicher Weise ausgebildet sein können.

Die Ablaufsteuerung ABL-ST ist dabei zentral für alle Befehlsverarbeitungsstufen vorgesehen. Sie koordiniert die Zusammenarbeit der einzelnen Verarbeitungsstufen und steuert die Übergabe der einzelnen Befehle von einer Stufe zur nächsten. Sie ist weiterhin zuständig für die Auflösung von Konfliktsituationen.

Teil der Ablaufsteuerung ABL-ST ist eine Sprungbefehlsüberwachungseinrichtung B-CONTROL, die in herkömmlicher Weise die von Sprungbefehlen festgelegten Sprungbedingungen prüft und entscheidet, mit welchem Befehl die Befehlsverarbeitung fortgesetzt werden soll.

In Auswirkung der Erfindung ist zusätzlich eine Anzeigenüberwachungseinrichtung AZ-CONTROL vorgesehen, die abhängig von einem Anzeigenänderungshinweis CH-AZ für jeden in der Stufe 2 decodierten Befehl und abhängig von einen bedingten Sprungbefehl betreffenden Steuersignalen BED und BED.NERF ein Steuersignal AZV an die Sprungbefehlüberwachungseinrichtung B-CONTROL liefert. Dieses Steuersignal AZV zeigt an, ob die vorliegende, vom Befehlsausführungsprozessor EXU gelieferte Anzeige AZ von nachfolgend auszuführenden Befehlen noch geändert werden kann oder nicht, also ungültig ist oder gültig. Beide Einrichtungen B-CONTROL und AZ-CONTROL arbeiten mit dem restlichen Teil der Ablaufsteuerung ABL-ST, der in der Steuerung ST zusammengefaßt ist, zusammen, was im einzelnen noch erläutert wird.

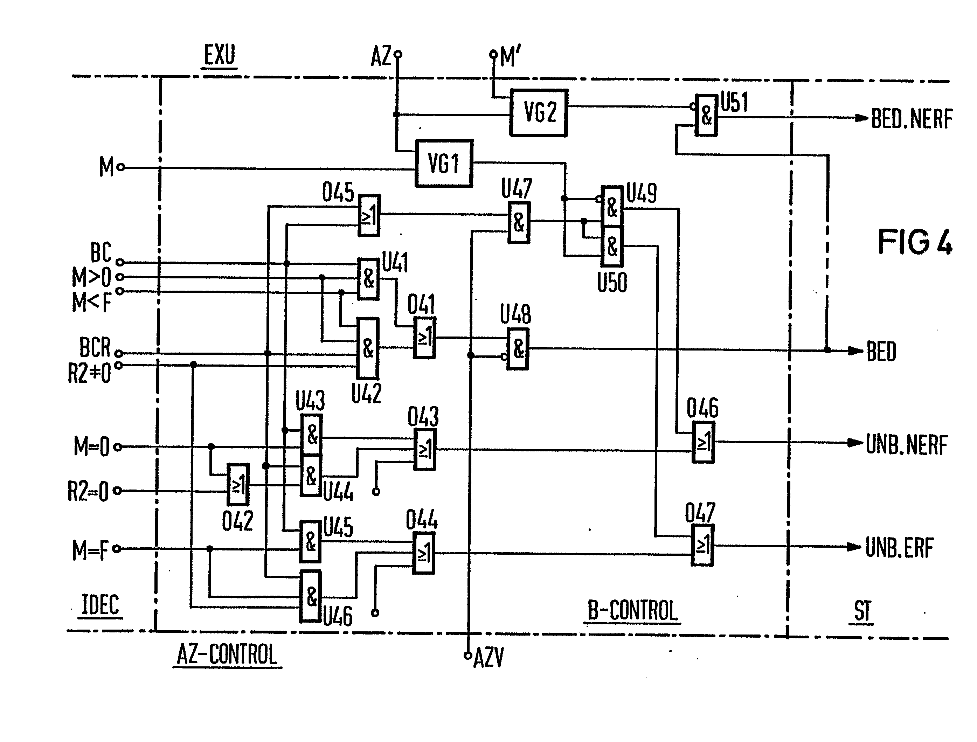

Fig. 4 zeigt das Schaltbild der gemäß der Erfindung abgeänderten Sprungbefehlüberwachungseinrichtung B-CONTROL, wobei nur die die bedingten Sprungbefehle BC und BCR betreffenden Teile dargestellt sind. Die notwendigen Verknüpfungen der vom Befehlsdecodierer IDEC gelieferten Steuersignale ergibt sich aus dem Aufbau und der Funktion dieser Befehle, was zunächst erläutert werden soll.

Fig. 3 zeigt zu diesem Zweck den Aufbau zweier bekannter bedingter Sprungbefehle BCR und BC nach der Siemens-Druckschrift D15/5104-04 "Zentraleinheiten: Siemens-System 7.500 und 7.700 - Beschreibung und Befehlsliste, Seite 10-40". Die Bits 0 bis 7 bilden jeweils den Operationscode OP und die Bits 8 bis 11 jeweils die Maske, während die übrigen Felder R2 bzw. X2/B/D2 die jeweilige Sprungadresse angeben, unter der bei einem erfüllten Sprung der erste Befehl n+1b der neuen Verzweigungsrichtung entsprechend den Ablaufdiagrammen von Fig. 1 zu finden ist.

Sind bei diesen Befehlen alle Bits der Maske M auf Null gesetzt, gilt demzufolge M=0, oder ist beim Befehl BCR die Adresse auf Null gesetzt und gilt demzufolge R2=0, dann erfolgt kein Sprung. Die Auswertung dieser Bedingungen erfolgt in Fig. 4 durch das ODER-Glied O42 und die UND-Glieder U43 und U44, deren Ausgangssignale über nachgeschaltete ODER-Glieder O43 und O46 zum Steuersignal UNB.NERF führen. Dieses Signal zeigt der übrigen Steuerung ST an, daß der ausgewertete Sprungbefehl als nicht erfüllter unbedingter Sprung zu behandeln ist und demzufolge die Befehlsfolge mit dem linear folgenden Befehl n+1 gemäß dem Ablaufdiagramm A von Fig. 1 fortgesetzt werden kann.

Sind bei beiden Befehlen alle Bits der Maske M auf Eins gesetzt und gilt demzufolge M=F, dann ist der Sprungbefehl als unbedingter Sprungbefehl zu werten, desen Sprungbedingung beim Befehl BC als erfüllt anzusehen ist, während beim Befehl BCR dasselbe Ergebnis nur gegeben ist, wenn gleichzeitig R=0 gilt. Dies wird in Fig. 4 mit den UND-Gliedern U45 und U46 ausgewertet, deren Ausgangssignale über die ODER-Glieder O44 und O47 zum Steuersignal UNB.ERF führen, was anzeigt, daß der Sprungbefehl als unbedingter Sprungbefehl mit erfüllter Sprungbedingung zu behandeln ist, so daß die Ablaufsteuerung gemäß dem Ablaufdiagramm B von Fig. 1 die Befehlsverarbeitung fortsetzt.

In allen übrigen Fällen, wenn also M 0 und M F, sowie R20 beim Befehl BCR gilt, was mit den UND-Gliedern U41 und U42 sowie dem nachgeschalteten ODER-Glied O41 ausgewertet wird, ist der bedingte Sprungbefehl auch als solcher zu behandeln. Dies gilt aber nur, wenn die Anzeige AZ bis zur Ausführung des Sprungbefehles noch geändert werden kann und demzufolge das Steuersignal AZV logisch Null ist.

Ist dagegen die vorliegende Anzeige AZ bereits gültig und das Steuersignal AZV logisch Eins, dann wird das Ausgangssignal des ODER-Gliedes O41 durch das UND-Glied U48 gesperrt und das die Ausführung eines bedingten Sprunges anzeigende Steuersignal BED für die übrige Ablaufsteuerung ST unterdrückt.

Gleichzeitig mit der Sperrung des UND-Glied U48 wird das UND-Glied U47 für das Ausgangssignal des ODER-Gliedes O45 freigegeben, das das Vorliegen eines bedingten Sprungbefehles BC oder BCR überwacht. Durch das Umschalten vom UND-Glied U48 auf das UND-Glied U47 wird daher ein bedingter Sprungbefehl in einen unbedingten Sprungbefehl umgewandelt, wobei der Vergleich der vorliegenden gültigen Anzeige AZ mit der Maske M des decodierten Sprungbefehles mittels des Vergleichers VG1 darüber entscheidet, ob die Sprungbedingung erfüllt ist oder nicht.

Bei erfüllter Sprungbedingung wird das UND-Glied 50 durchlässig, dessen Ausgangssignal über das ODER-Glied O47 zum Steuersignal UNB.ERF wird. Bei nicht erfüllter Sprungbedingung wird dagegen das UND-Glied U49 durchlässig, dessen Ausgangssignal über das ODER-Glied O46 das Steuersignal UNB.NERF erzeugt.

Bei einem als bedingter Sprungbefehl auszuführenden Befehl kann weiterhin nach Ausführung des Sprungbefehles anhand der vom Ausführungsprozessor EXU ermittelten endgültigen Anzeige AZ für den Vorgängerbefehl und der zur Verfügung gestellten Maske M', die der ursprünglichen Maske M entspricht, mit dem Vergleicher VG2 und dem nachgeschalteten UND-Glied U51 geprüft werden, ob die Sprungbedingung erfüllt ist oder nicht, was im letzteren Falle das am Ausgang des UND-Gliedes U51 abgegebene Steuersignal BED.NERF zu logisch Eins werden läßt.

Der in diesem Zusammenhang interessierende, geänderte Teil der Sprungbefehlüberwachungseinrichtung B-CONTROL unterscheidet sich damit von der üblicherweise verwendeten Sprungbefehlüberwachungseinrichtung im wesentlichen durch die Umschaltbarkeit abhängig vom Steuersignal AVZ und wenigstens durch den Vergleicher VG1, während das Ausgangssignal des Vergleichers VG2 auch direkt vom Ausführungsprozessor EXU zur Verfügung gestellt werden kann. Die freien Anschlüsse an den ODER-Gliedern O43 und O44 sind für Auswertungssignale von anderen entsprechend zu behandelnden Sprungbefehlen, z.B. BALR und BAL, vorgesehen, die auf Seite 10-39 der bereits genannten Siemens-Druckschrift beschrieben sind.

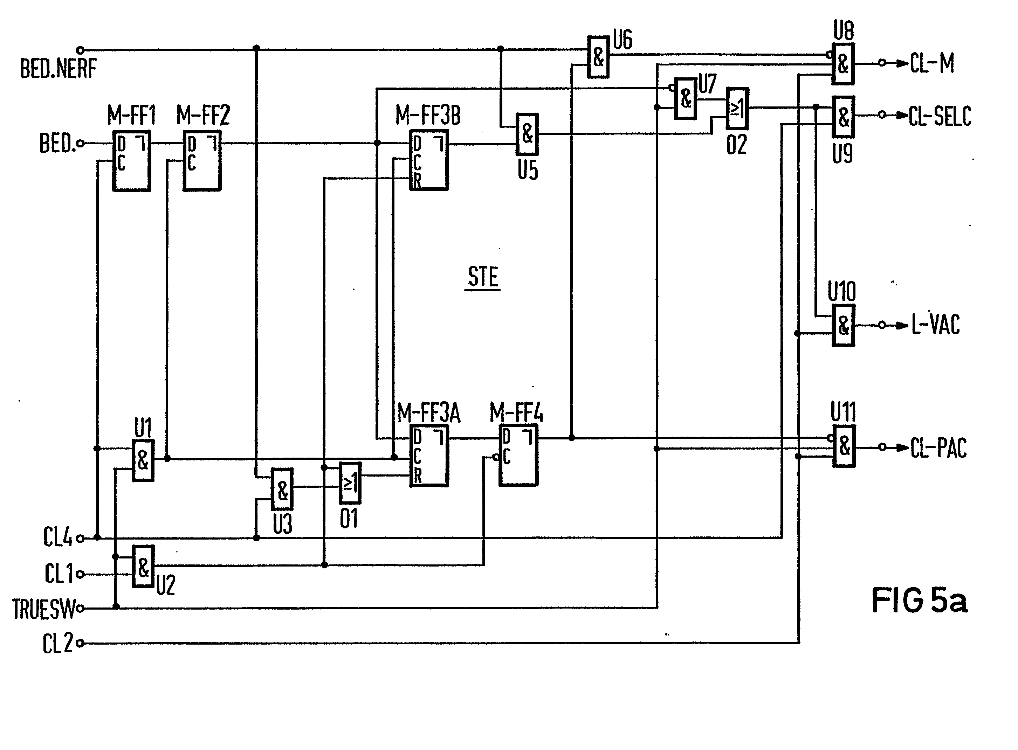

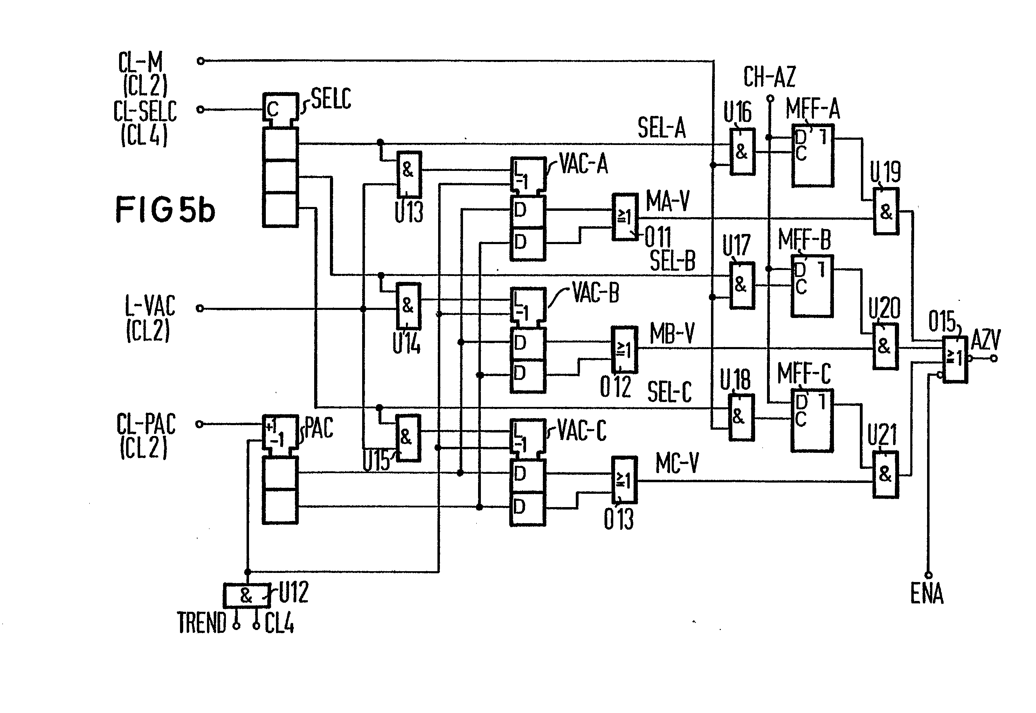

Die Schaltungsanordnung von Fig. 5A und Fig. 5B bilden zusammen die Anzeigeüberwachungseinrichtung AZ-CONTROL von Fig. 2 zur Erzeugung des Steuersignales AZV für die Sprungbefehlüberwachungseinrichtung B-CONTROL von Fig. 4.

Die vom Befehlsdecodierer IDEC nacheinander gelieferten Anzeigenänderungshinweise CH-AZ werden jeweils in einer der drei Kippstufen MFF-A bis MFF-C im Schaltungsteil von Fig. 5B gespeichert, die zyklisch umlaufend angesteuert werden und deren Ausgänge über nachgeschaltete UND-Glieder U19 bis U21 zur Gültigschaltung auf die Eingänge eines ODER-Gliedes O15 mit invertiertem Ausgang geschaltet werden, der das Steuersignal AVZ liefert. Ist eine dieser Kippstufen gesetzt, so wird das Signal AVZ zu logisch Null, was die Ungültigkeit der vorliegenden Anzeige AZ anzeigt, da sie durch nachfolgend auszuführende Befehle bis zur Ausführung des erkannten Sprungbefehles ggfs. noch geändert werden kann.

Durch das Signal ENA am invertierten weiteren Eingang des ODER-Gliedes O15 kann die Erzeugung des die Behandlung bedingter Sprungbefehle als unbedingte Sprungbefehle beeinflußende Signal AVZ unterdrückt werden, ohne daß durch einen Fehler ein solches Signal vorgetäuscht werden kann.

Bei dem dem Schaltungsteil von Fig. 5B zugrundeliegenden Steuerungsprinzip werden die drei Speicherkippstufen MFF-A bis MFF-C nicht den einzelnen auf die Interpretationsstufe 2 folgenden Verarbeitungsstufen fest zugeordnet, sondern jeweils einem die Verarbeitungsstufen 3 bis 5 nacheinander durchlaufenden Befehl. Die Auswahl erfolgt durch einen zyklisch arbeitenden Auswahlzähler SELC, der je Arbeitszyklus EOZ mit einem vom letzten Zyklustakt, z.B. CL4, abgeleiteten Zähltakt CL-SELC jeweils um einen Schritt weitergeschaltet wird. Dieser Auswahlzähler weist eine der Anzahl der Speicherkippstufen entsprechende Anzahl von Zählstufen auf, deren Ausgänge SEL-A bis SEL-C jeweils eines der UND-Glieder U16 bis U18 für den Steuertakt CL-M freigeben, so daß dieser auf den Takteingang der angeschlossenen rückflankengesteuerten Speicherkippstufen MFF-A bis MFF-C einwirken kann.

Zur weiteren Steuerung ist für jede Speicherkippstufe MFF... ein gesonderter Gültigkeitszähler VAC... vorgesehen, der jeweils mit der Aufnahme der Bearbeitung eines Befehles n in der der Interpretationsstufe 2 folgenden Verarbeitungsstufe 3 mit einem von einem vierten Zähler PAC als Vorlaufzähler gelieferten codierten Zählerstand geladen wird, der die Anzahl der in der Ausführungsstufe 5 damit insgesamt noch auszuführenden Befehle, z.B. n-2, n-1 und n, anzeigt.

Die Zählerstände aller Gültigkeitszähler VAC-A bis VAC-C werden dann bei jeder Ausführung eines Befehles mit dem dies anzeigenden Steuersignal TREND des Ausführungsprozessors EXU um einen Zählschritt erniedrigt, so daß beim Zählerstand 0 der jeweils in der zugehörigen Speicherkippstufe, z.B. MFF-C, abgespeicherte Anzeigenänderungshinweis CH-AZ ungültig wird, weil der zugehörige Befehl, z.B. n, ausgeführt ist.

Bei jeweils nur einen Zyklus für die Ausführung benötigenden Befehlen, wie dies im Beispiel unterstellt ist, wird also der Zählerstand des Vorlaufzählers PAC zu Beginn eines jeden Arbeitszyklus EOZ bei Bearbeitung eines jeden neuen Befehls in der Stufe 3 mit einem aus dem Zyklustakt CL2 abgeleiteten Steuertakt CL-PAC um einen Schritt erhöht und am Ende eines jeden Arbeitszyklus EOZ mit Beendigung der Ausführung eines jeden Befehls mit einem vom Zyklustakt CL4 abgeleiteten Steuertakt um einen Schritt erniedrigt. Bei einem vollgelaufenen Fließband mit drei auf die Interpretationsstufe 2 folgenden weiteren Verarbeitungsstufen 3 bis 5 wird der Vorlaufzähler PAC jeweils zu Beginn eines Arbeitszyklus auf den Zählerstand 3 gebracht und am Ende desselben Zyklus auf den Zählerstand 2 erniedrigt, so daß die Gültigkeitszähler VAC... immer mit dem Zählerstand 3 geladen werden. Benötigt ein Befehl dagegen mehrere Arbeitszyklen für seine Ausführung, dann verzögert sich die Rückführung des Zählerstandes jeweils bis zum letzten Ausführungszyklus.

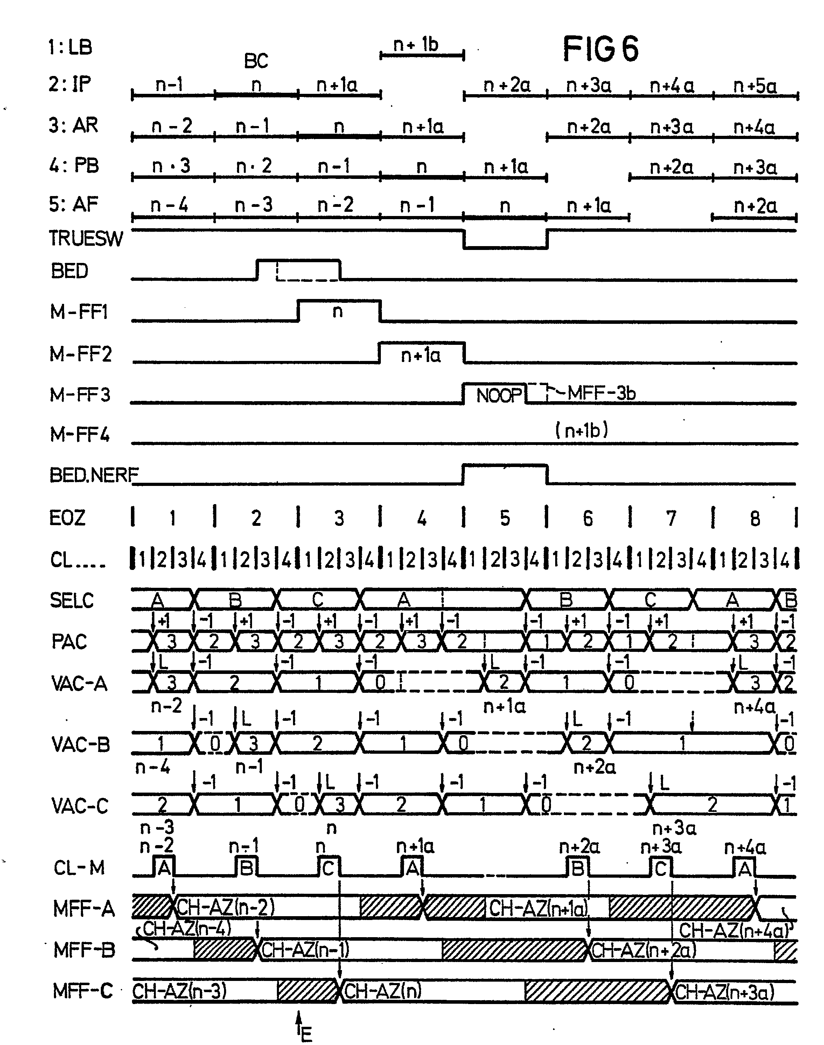

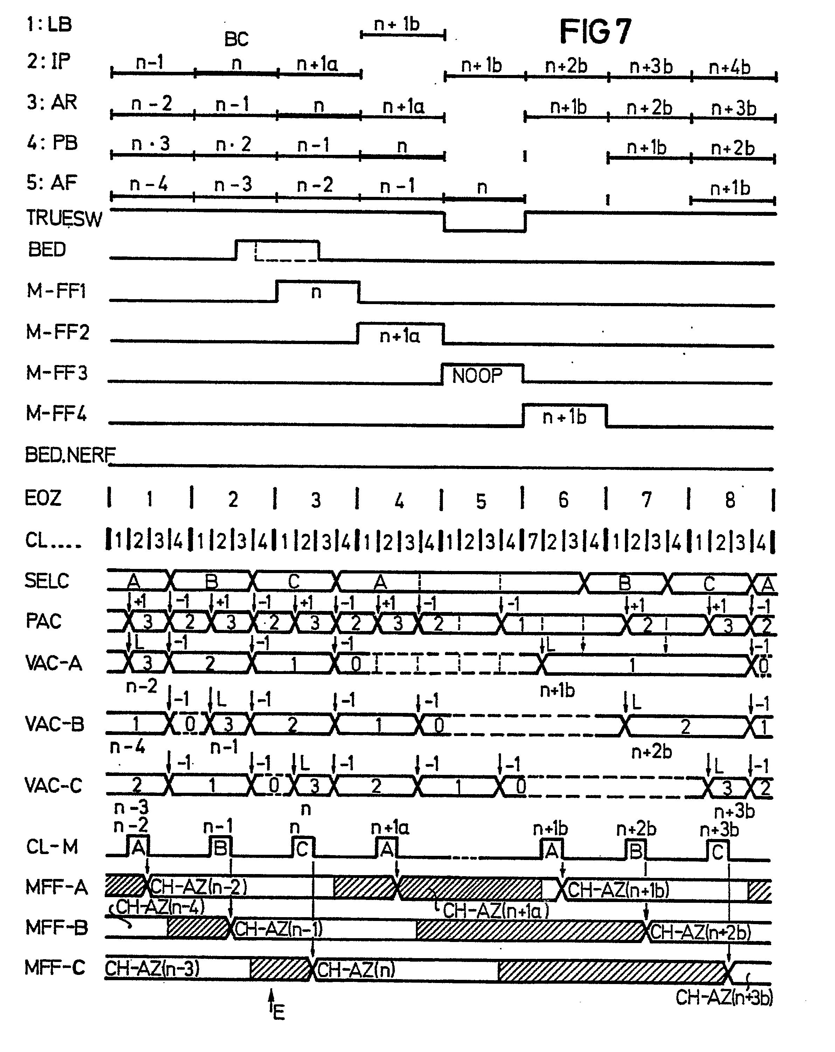

Die Ablauf- und Impulsdiagramme von Fig. 6 und Fig. 7 veranschaulichen ausgehend von den Ablaufdiagrammen C bzw. D in Fig. 1 die Zusammenhänge bei der Ausführung von bedingten Sprungbefehlen.

Ausgehend von den einzelnen Arbeitszyklen EOZ mit den einzelnen Taktimpulsen CL1 bis CL4 wird normalerweise mit jedem Taktimpuls CL4 der Auswahlzähler SELC um einen Schritt zyklisch fortgeschaltet, so daß er jeweils für die Dauer eines Arbeitszyklus, aber gegenüber diesem um eine Taktbreite vorlaufend, nacheinander die Zählerstände A, B und C in zyklischer Folge fortfahrend liefert.

Ebenso wird der Vorlaufzähler PAC zu Beginn eines Taktimpulses CL2 jeweils um einen Schritt erhöht, wenn gleichzeitig ein Befehl in der Verarbeitungsstufe 3 bearbeitet wird, also das Signal TRUESW gleich logisch Eins ist. Bei einem anlaufenden Fließband beginnt dieser Zähler also beim Zählerstand 0, und sobald er den maximalen Zählerstand, nämlich 3 im vorliegenden Falle, erreicht hat, wird er mit jedem in Stufe 5 ausgeführten Befehl, was durch das Signal TREND in Fig. 5B angezeigt wird, durch den Taktimpuls CL4 vorübergehend auf den Zählerstand 2 erniedrigt. Im Normalfall pendelt also der Zählerstand zwischen 3 und 2 hin und her.

Der Ladetakt CL-VAC für die Gültigkeitszähler VAC-A bis VAC-C zur Übernahme des Zählerstandes aus dem Vorlaufzähler PAC entspricht den Taktimpulsen CL2, der für den jeweils vom Auswahlzähler SELC ausgewählten Gültigkeitszähler wirksam wird. Bei den Impulsdiagrammen von Fig. 6 und Fig. 7 wird z.B. im Arbeitszyklus EOZ1 mit Zählerstand A des Auswahlzählers SELC der Gültigkeitszähler VAC-A angesteuert und der Zählerstand 3 aus dem Vorlaufzähler PAC übernommen usw. Der Zählerstand des Gültigkeitszählers VAC-A wird dann wie der des Vorlaufzählers PAC mit dem Taktimpuls CL4 erniedrigt, bis er den Zählerstand 0 erreicht, der den zugehörigen Anzeigenänderungshinweis ungültig werden läßt, da über das nachgeschaltete ODER Glied O11 das UND-Glied U19 gesperrt wird.

Abhängig vom Zählerstand des Auswahlzählers SELC wird jeweils eine der Speicherkippstufen MFF-A bis MFF-C mit den Taktimpulsen CL-M angesteuert, die von den Taktimpulsen CL2 abgeleitet sind, und es wird der ggfs. anliegende Anzeigenänderungshinweis CH-AZ abgespeichert.

Unterstellt man im vorliegenden Falle, daß das in der zweiten Verarbeitungsstufe abgeleitete Signal CH-AZ jeweils von der Mitte eines Arbeitszyklus bis zur Mitte des nächsten Arbeitszyklus gültig ist, so steht mit Bezug auf die Impulsdiagramme von Fig. 6 und Fig. 7 das Signal CH-AZ für den Befehl n-2 bis zur Mitte des Arbeitszyklus EOZ1 zur Verfügung und wird abhängig von der gültigen Einstellung des Auswahlzählers SELC dem Gültigkeitszähler VAC-A und der Speicherkippstufe MFF-A zugeordnet. In analoger Weise wird das vom Folgebefehl n-1 ab Mitte des Arbeitszyklus EOZ1 zur Verfügung stehende Signal CH-AZ in der ersten Hälfte des nachfolgenden Arbeitszyklus EOZ2 auf Grund der geänderten Einstellung des Auswahlzählers SELC dem Gültigkeitszähler VAC-B und der Speicherkippstufe MFF-B zugeordnet usw.

Die in den Speicherkippstufen MFF... abgespeicherten Signale CH-AZ für die einzelnen Befehle sind jeweils nur gültig, wenn der zugehörige Gültigkeitszähler VAC... einen von 0 abweichenden Zählerstand aufweist. In den zugehörigen Impulszeilen für die drei Speicherkippstufen MFF... in den Ablaufdiagrammen von Fig. 6 und Fig. 7 kennzeichnen die nicht schraffierten Bereiche die jeweilige Gültigkeitsperiode. Der Anzeigenänderungshinweis für den Befehl n-2 in der Speicherkippstufe MFF-A ist also beispielsweise mit Beginn des Taktimpulses CL3 im Arbeitszyklus EOZ1 bis zum Beginn des Taktimpulses CL4 im Arbeitszyklus EOZ3 gültig. Die Gültigkeitsperiode dauert also immer solange, bis der zugehörige Befehl in der Stufe 5 so gut wie beendet ist und die von diesem herrührende Anzeige gesetzt werden kann. Der zugehörige Zählerstand des Gültigkeitszählers VAC-A kennzeichnet entsprechend dem Wert aus (6-Zählerstand) dabei nacheinander die Bearbeitung des zugehörigen Befehls n-2 in der Stufe 3, der Stufe 4 und schließlich der Stufe 5.

Während der Interpretation eines Sprungbefehles n im Arbeitszyklus EOZ2 sind mit Beginn des Taktimpulses CL3 zunächst die in allen drei Kippstufen MFF-A bis MFF-C gespeicherten Anzeigenänderungshinweise für die Befehle n-3, n-2 und n-1 gültig. Dabei sei angenommen, daß nur der Befehl n-3 die Anzeige noch verändern kann. Es gilt daher zunächst AVZ=0, so daß bei einem bestimmten Sprungbefehl in Fig. 4 das Signal BED erzeugt wird. Mit dem Taktimpuls CL4 wird dann der Zählerstand des zugehörigen Gültigkeitszählers VAC-C zu 0 und damit die Aussage der Speicherkippstufe MFF-C ungültig, so daß das Steuersignal AZV nun zu logisch Eins wird. Das UND-Glied U48 schaltet daher das Signal BED ab. Da mit dem Taktimpuls CL4 gleichzeitig auch die vom Befehl n-3 herrührende gültige Anzeige gesetzt wird, kann zum Ende des Arbeitszyklus EOZ2, was durch den mit E bezeichneten Pfeil angedeutet ist, eindeutig entschieden werden, ob abhängig vom Vergleicher VG1 das UND-Glied U49 oder das UND-Glied U50 wirksam zu schalten und demzufolge über das ODER-Glied O46 das Signal UNB.NERF oder über das ODER-Glied O47 das Signal UNB.ERF auszulösen ist.

Im vorliegenden Falle sei jedoch für die Diagramme von Fig. 6 und Fig. 7 unterstellt, daß der Befehl n als bedingter Sprungbefehl auszuführen ist, was durch den Impulszug BED angedeutet ist. Dieses Signal wird daher nicht mit Beginn des Taktimpulses CL4 im Arbeitszyklus EOZ2 durch das Signal AZV=1 abgeschaltet.

Damit nun der bisher beschriebene Steuerungsmechanismus des Schaltungsteiles von Fig. 5B auch einwandfrei arbeitet, wenn ein bedingter Sprungbefehl auszuführen ist, ist dem Schaltungsteil von Fig. 5B der Schaltungsteil von Fig. 5A vorgeschaltet, der die Steuerimpulse für den Schaltungsteil von Fig. 5B liefert und verhindert, daß ein zunächst auf Verdacht interpretierter, aber nicht auszuführender linearer Folgebefehl n+1a das Ergebnis der Überwachung verfälschen kann.

Der Schaltungsteil von Fig. 5A besteht aus fünf rückflankengesteuerten Kippstufen M-FF1, M-FF2, M-FF3A, M-FF3B und M-FF4, von denen die Kippstufen M-FF1 und M-FF2 einerseits mit den Kippstufen M-FF3A und M-FF4 und andererseits mit der Kippstufe M-FF3B eine Reihenschaltung bilden. Die Kippstufe M-FF1 überwacht als Eingangskippstufe, ob vom Steuerungsteil ST (Fig. 4) ein bedingter Sprung mit dem Eingangssignal BED gemeldet wird, so daß mit der Rückflanke des letzten Taktimpulses CL4 des jeweils laufenden Arbeitszyklus die Kippstufe M-FF1 als Merker gesetzt wird - in Fig. 6 und Fig. 7 jeweils zu Beginn des Arbeitszyklus EOZ3. Dieser Merkzustand wird dann mit jedem weiteren in der Stufe 3 ausgeführten Befehl - das Signal TRUESW=1 steht an - mit den Taktimpulsen CL4 über das UND-Glied U1 zunächst an die Kippstufe M-FF2 und dann an die Kippstufen M-FF3A und M-FF3B weitergeleitet, so daß bei einem erfüllten bedingten Sprung - Signal BED.NERF=0 - schließlich die Kippstufe M-FF4 mit der Vorderflanke des Taktimpulses CL1 über das UND-Glied U2 gesetzt werden kann - in Fig. 7 zu Beginn des Arbeitszyklus EOZ6. Der Merkzustand wandert somit mit Beginn eines jeden Arbeitszyklus von einer der vier Kippstufen M-FF... zur nächsten weiter (Fig. 7).

Bei einem bedingten Sprung besteht die erste Auswirkung gemäß Fig. 6 und Fig. 7 darin, daß bei gesetzter Kippstufe M-FF2 im Arbeitszyklus EOZ4 das UND-Glied U7 und damit über das ODER-Glied O2 das UND-Glied U10 gesperrt wird, so daß mit dem Taktimpuls CL2 kein Ladeimpuls L-VAC für den vom Auswahlzähler SELC ausgewählten Gültigkeitszähler VAC-A abgegeben wird und dieser das mit dem Taktimpuls CL-M im Arbeitszyklus EOZ4 in die Speicherkippstufe MFF-A übernommene Signal CH-AZ für den auf Verdacht interpretierten Befehl n+1a nicht für gültig erklärt.

Auch wird am Ende des Arbeitszyklus EOZ4 mit Takt CL4 der Zählerstand des Auswahlzählers SELC nicht verändert, weil die gesetzte Kippstufe M-FF2 über das UND-Glied U7 auch das UND-Glied U9 in Fig. 5A sperrt, so daß kein Taktimpuls CL-SELC ausgelöst werden kann. Als weiteres entfällt im nachfolgenden Arbeitszyklus EOZ5 der Taktimpuls CL-PAC zum Hochzählen des Gültigkeitszählers PAC, so daß der Zählerstand 2 erhalten bleibt, weil während des Arbeitszyklus EOZ5 das Signal TRUESW entfällt und das UND-Glied U11 gesperrt bleibt.

Handelt es sich gemäß dem Signal BED.NERF=1 um einen nicht erfüllten bedingten Sprung (Fig. 6), was mit Ende der Befehlsausführung des Befehls n-1 entschieden ist, wird infolge der gleichfalls gesetzten Kippstufe M-FF3B das UND-Glied U5 durchgesteuert, so daß über das ODER-Glied O2 das UND-Glied U10 mit dem Taktimpuls CL2 wieder für einen Taktimpuls L-VAC freigegeben wird. Der zu diesem Zeitpunkt ausgewählte Gültigkeitszähler VAC-A wird geladen und der den Befehl n+1a betreffende Speicherin halt der Speicherkippstufe MFF-A dadurch nachträglich gültig.

Beim erfüllten bedingten Sprung gemäß Fig. 7 bleibt die Ungültigkeit für die Speicherkippstufe MFF-A dagegen weiter bestehen.

In jedem Falle entfällt bei einem bedingten Sprungbefehl entsprechend dem Signal BED=1 im Arbeitszyklus EOZ5 wegen der Arbeitspause in Stufe 3 und dem damit verbundenen Signal TRUESW=0 der mit dem Taktimpuls CL2 sonst ausgelöste Taktimpuls CL-M.

Ab dem Taktimpuls CL4 im Arbeitszyklus EO5 ist der weitere Arbeitsablauf bei einem nicht erfüllten bedingten Sprung gemäß Fig. 6 wieder ungestört, da über das UND-Glied U3 und das ODER-Glied O1 die Kippstufe M-FF3A mit Beginn des Taktimpulses CL4 wieder zurückgesetzt wird, so daß die nachfolgende Kippstufe M-FF4 nicht mehr gesetzt werden kann. Weiterhin steuert die noch gesetzte Kippstufe M-FF3B über das UND-Glied U5 und das ODER-Glied O2 das UND-Glied U9 auf, so daß der Auswahlzähler SECL wieder weitergeschaltet wird und dieser mit dem neuen Zählerstand B die Freigabe der Speicherkippstufe MFF-B für den zum linearen Folgebefehl n+2a gehörigen Anzeigenänderungshinweis CH-AZ bewirkt usw.

Der Vorlaufzähler PAC pendelt in diesem Falle zunächst zwischen den Zählerabständen 2 und 1, bis im Arbeitszyklus EOZ4 wegen der Arbeitspause der Stufe 5 das Signal TREND=1 entfällt und der Taktimpuls CL4 keinen Rückzählimpuls auslösen kann. Der maximale Zählerstand 3 wird damit im Arbeitszyklus EOZ8 wieder erreicht.

Beim erfüllten bedingten Sprung gemäß Fig. 7 dauert die Unterbrechung des normalen Arbeitsablaufes länger an, da mit dem Taktimpuls CL4 im Arbeitszyklus EOZ5 noch keine Zählerstandsänderung des Auswahlzählers SELC erfolgt. Dies wird durch das UND-Glied U5 wegen des Signales BED.NERF=0 und durch das UND-Glied U7 wegen des Signals TRUESW=0 verhindert. Über das UND-Glied U9 kann daher mit dem Taktimpuls CL4 kein Taktimpuls CL-SELC ausgelöst werden.

Auch der mit dem Taktimpuls CL2 im Arbeitszyklus EOZ5 normalerweise ausgelöste Ladeimpuls L-VAC wird unterdrückt, da das UND-Glied U10 in Fig. 5A wegen der Signale BED-NERF=0 und TRUESW=0 gesperrt bleibt. Der in der Speicherkippstufe MFF-A abgespeicherte Anzeigenänderungshinweis CH-AZ für den Befehl n+1a bleibt daher weiter ungültig. Außerdem sperrt die im Arbeitszyklus EOZ6 gesetzte Kippstufe M-FF4 das UND-Glied U11, so daß nachfolgend der Zählerstand des Vorlaufzählers PAC nicht erhöht werden kann.

Da aber im Arbeitszyklus EOZ6 das Signal TRUESW wieder zu logisch Eins wird, löst der Taktimpuls CL2 über das UND-Glied U10 wieder einen Ladeimpuls L-VAC für den Gültigkeitszähler VAC-A und einen Übernahmeimpuls CL-M über das UND-Glied U8 aus. Da zu diesem Zeitpunkt der zum Befehl n+1b gehörige Anzeigenänderungshinweis CH-AZ ansteht, wird dieser bei unverändertem Zählerstand A des Auswahlzählers SELC in die Speicherkippstufe MFF-A übernommen und dadurch der vorsorglich gespeicherte Änderungshinweis für den Befehl n+1a ersetzt, ohne daß dieser die Auswertung beeinflussen kann, da der zugehörige Gültigkeitszähler VAC-A bis zur Umschaltung den Zählerstand 0 beibehalten hat.

Während der Arbeitsunterbrechung für die Stufe 5 in den Arbeitszyklen EOZ6 und EOZ7 bleiben wegen des Signals TREND=0 die mit dem Taktimpuls CL4 normalerweise ausgelösten Rückzählimpulse für den Vorlaufzähler PAC und die Gültigkeitszähler VAC... zunächst aus, so daß der Vorlaufzähler PAC auf den Zählerstand 3 hochlaufen und damit in den normalen Arbeitsablauf bei vollem Fließband überleiten kann.

Im Unterschied zum Ablaufdiagramm von Fig. 6 wird also bei einem erfüllten bedingten Sprung gemäß Fig. 7 durch die Unterbrechung der Fortschaltung des Auswahlzählers SELC dieselbe Speicherkippstufe, im vorliegenden Falle die Kippstufe MFF-A, zweimal nacheinander mit den Signalen CH-AZ für zwei unterschiedliche Befehle, nämlich zunächst n+1a und dann n+1b, belegt.

Ähnliches gilt insgesamt, wenn die Ausführung des Befehles n-1 in der Stufe 5 statt - wie dargestellt - eines Arbeitszyklusses zwei Arbeitszyklen, also die beiden Arbeitszyklen EOZ4 und EOZ5, erfordert. In diesem Falle wird zwar bei einem nicht erfüllten Sprung die Kippstufe M-FF4 in Fig. 5A für die Dauer des Arbeitszyklusses EOZ6 ebenfalls gesetzt. Diese sperrt dann aber wegen des erst im Arbeitszyklus EOZ6 auftretenden Signales BED.NERF=1 über das UND-Glied U6 das UND-Glied U8 und verhindert damit die Übernahme des zum dann bereits interpretierten Befehl n+1b gehörigen Signals CH-AZ in die irrtümlich noch ausgewählte Speicherkippstufe MFF-A.

Im übrigen steuern bei unterschiedlichen Befehlsausführungszeiten in der Stufe 5 oder bei sonstigen Verzögerungen und Arbeitspausen in den übrigen Fließbandstufen, weil z.B. der Befehlspuffer leergelaufen oder eine Konfliktsituation aufgetreten ist, die Signale TREND und TRUESW die zeitgerechte Zuordnung der Speicherkippstufen zu den Signalen CH-AZ der einzelnen Befehle. Auch werden bei jedem neuen Anlaufen des Fließbandes die einzelnen Zähler und Kippstufen gesondert zurückgesetzt, was im einzelnen nicht dargestellt ist.

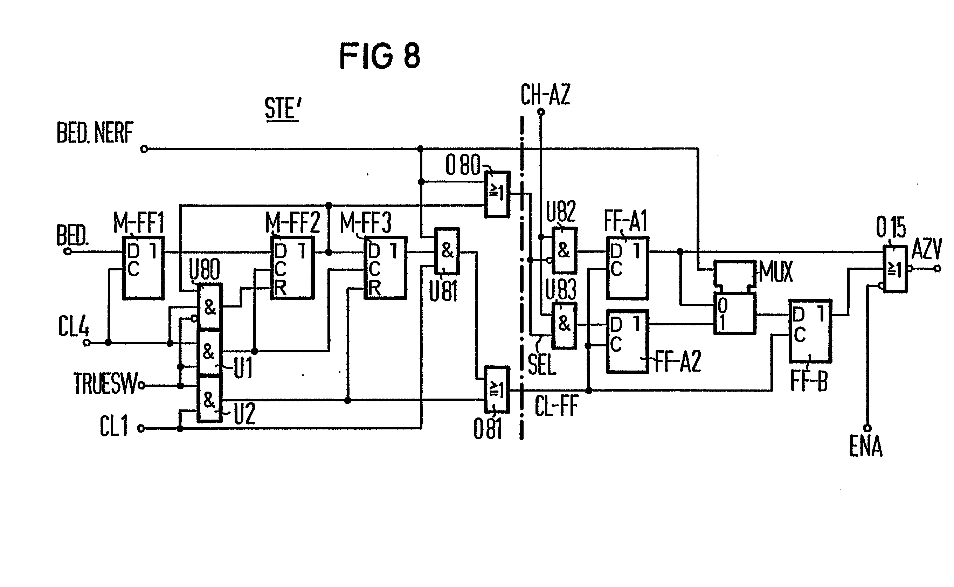

Fig. 8 zeigt ein weiteres Ausführungsbeispiel für die Anzeigeüberwachungseinrichtung AZ-CONTROL von Fig. 2, bei der der Anzeigenänderungshinweis CH-AZ für einen Befehl nicht in einer vorübergehend als befehlsindividuelles Speicherelement wirkenden Kippstufe gespeichert wird, sondern nacheinander in den relevanten Verarbeitungsstufen des Fließbandes zugeordneten Speicherkippstufen FF-A und FF-B, wobei der Anzeigenänderungshinweis entsprechend der Wanderung des Befehles von Verarbeitungsstufe zu Verarbeitungsstufe von Speicherkippstufe zu Speicherkippstufe wandert. Auch unterscheidet sich dieses Ausführungsbeispiel vom vorangehend beschriebenen dadurch, daß es lediglich auf die Minimalerfordernisse für die Sprungbefehlsentscheidung entsprechend den gezeigten Arbeitsabläufen abgestellt ist, um lediglich den vom Ausführungsbeispiel gemäß Fig. 4 bis 7 abweichenden Steuerungsmechanismus anzudeuten.

Im vorliegenden Falle sind zwei Eingangskippstufen FF-A1 und FF-A2 vorgesehen, die abhängig vom Auswahlsignal SEL den anliegenden Anzeigenänderungshinweis CH-AZ über das UND-Glied U22 bzw. U23 übernehmen, wenn ein Taktimpuls CL-FF wirksam wird. Die Ausgänge dieser beiden Kippstufen werden dann wahlweise durch einen dazwischengeschalteten Multiplexer als Auswahlschaltglied auf den Eingang der Speicherkippstufe FF-B geschaltet, die ebenfalls mit dem Signal CL-FF getaktet wird. Welcher der Ausgänge der beiden Eingangsspeicherkippstufen FF-A1 und FF-A2 jeweils durchgeschaltet wird, ist vom Signal BED.NERF abhängig. Die Ausgänge der Kippstufen FF-A1 und FF-B sind parallel auf die Eingänge eines am Ausgang invertierten ODER-Glie des O15 geschaltet, das wie das ODER-Glied O15 von Figur 5B das Signal AZV liefert und das ebenfalls durch das aktive Signal ENA an einem invertierten weiteren Eingang wirksam geschaltet werden kann.

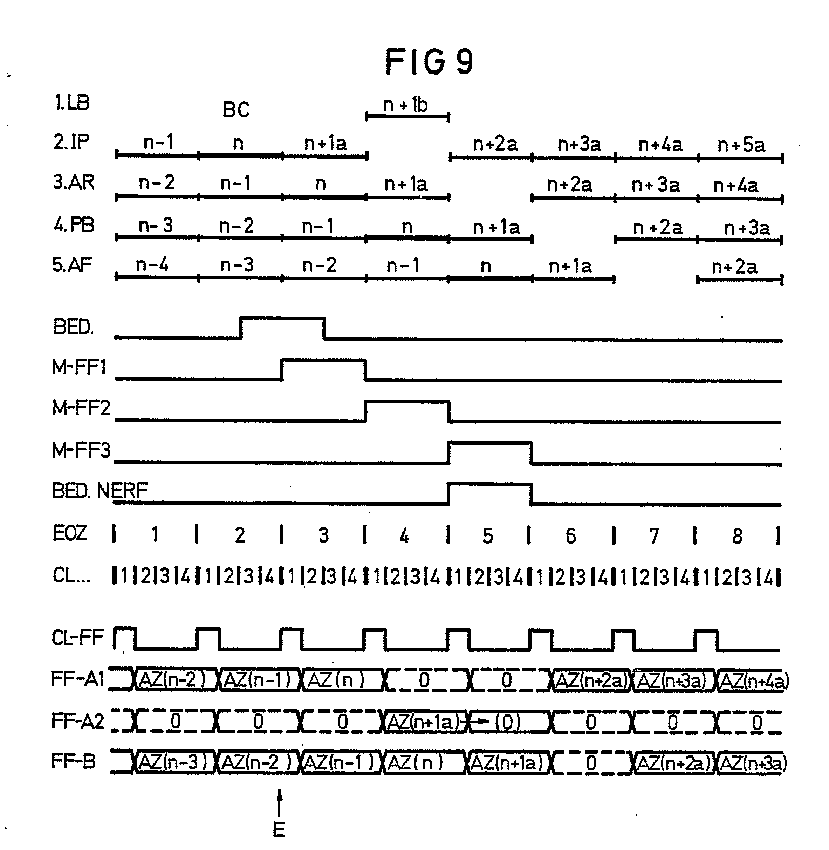

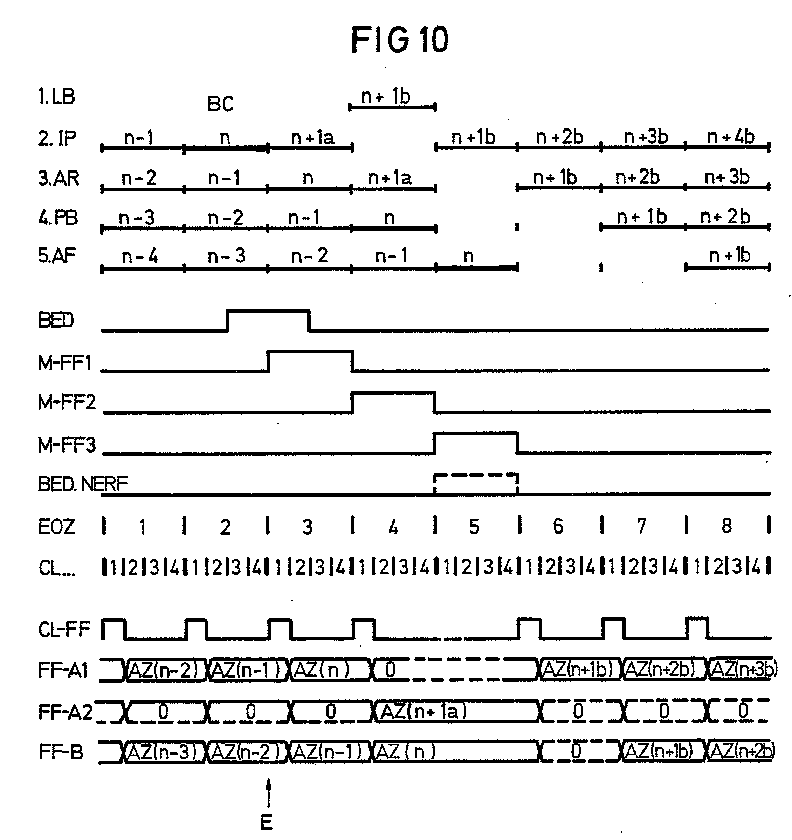

Die Signale SEL und CL-FF liefert wiederum eine aus den Kippstufen M-FF1, M-FF2 und M-FF3 bestehende Reihenschaltung, die in gleicher Weise wie die von Fig. 5A mit dem Taktimpuls CL4 abhängig vom Signal TRUESW=1 über das UND-Glied U1 getaktet werden und das Signal BED=1 bei einem erkannten bedingten Sprung auswerten und von Stufe zu Stufe weiterleiten, wie aus den zugehörigen Diagrammen von Fig. 9 und Fig. 10 ersichtlich ist.

Mit den Taktimpulsen CL1 werden abhängig vom Signal TRUESW=1 über das UND-Glied U2 Taktimpulse CL-FF ausgelöst, die die Speicherkippstufen takten, wobei im Regelfall SEL=0 gilt, so daß der jeweils anstehende Anzeigenänderungshinweis CH-AZ über das UND-Glied U82 der Speicherkippstufe FF-A1 zugeführt und mit dem jeweils nachfolgenden Taktimpuls CL-FF an die Speicherkippstufe FF-B übergeben wird.

Am Ende eines Arbeitszyklus stehen daher wie bei dem anderen Ausführungsbeispiel bei vollgelaufenem Fließband jeweils nur die Aussagen zu den sich gerade in Stufe 3 und Stufe 4 in Bearbeitung befindlichen Befehlen, z.B. am Ende des Arbeitszyklus EOZ1 zu den Befehlen n-2 und n-3, zur Verfügung, während der gerade in der Stufe 5 die Ausführung beendende Befehl n-4 die zu berücksichtigende Anzeige AZ liefert.

Nach Interpretation eines bedingten Sprungbefehles n wird wegen des Signals BED=1 zu Beginn des Arbeitszyklus EOZ3 die aus den Kippstufen M-FF1 bis M-FF3 bestehende Steuerschiebekette geladen, so daß mit Setzen der Kippstufe M-FF2 im nachfolgenden Arbeitszyklus EOZ4 über das ODER-Glied O80 das UND-Glied U82 gesperrt und das Signal CH-AZ für den Befehl n+1a mit dem UND-Glied U83 auf den Eingang der zweiten Eingangskippstufe FF-A2 umgeschaltet wird. Diese Umschaltung wird anschließend solange aufrechterhalten, bis bei einem erfüllten Sprung die Kippstufe M-FF2 wieder zurückgesetzt ist oder bei einem nicht erfüllten Sprung das Signal BED.NERF=1 beendet ist. Das Signal CH-AZ für den Befehl n+1a ist daher vorläufig nicht für das Signal AZV auswertbar. Handelt es sich entsprechend Fig. 9 um einen nicht erfüllten Sprung, dann wird mit Setzen der Kippstufe M-FF3 durch den Taktimpuls CL1 das UND-Glied U81 aufgesteuert und über das ODER-Glied O81 trotz TRUESW=0 ein Ersatzschiebeimpuls CL-FF ausgelöst, so daß das Signal CH-AZ für den Befehl n+1a im Arbeitszyklus EOZ5 über das wegen BED.NERF=1 umgeschaltete Auswahlschaltglied MUX in die Speicherkippstufe FF-B übernommen wird.

Da mit Ende des Arbeitszyklus EOZ5 die Umschaltung der UND-Glieder U82 und U83 wieder aufgehoben ist, wird der nachfolgende Anzeigenänderungshinweis CH-AZ für die weiteren Folgebefehle n+2a usw. wieder von der ersten Eingangskippstufe FF-A1 übernommen usw.

Handelt es sich dagegen gemäß Fig. 10 um einen erfüllten bedingten Sprung, dann unterbleibt im Arbeitszyklus EOZ5 der zusätzliche Schiebetakt CL-FF und die Signalzustände der Kippstufen FF-A1, FF-A2 und FF-B bleiben unverändert. Durch das Rückschalten auf den Eingang der Kippstufe FF-A1 am Ende des Arbeitszyklus EOZ4 wird mit dem Taktimpuls CL-FF zu Beginn des Arbeitszyklus EOZ6 auf den Anzeigenänderungshinweis CH-AZ der Folgebefehle n+1b usw. umgesteuert und das in der Eingangskippstufe FF-A2 zwischengespeicherte Signal CH-AZ für den nicht auszuführen den Folgebefehl n+1a bei der Bildung des Ausgangssignales AZV unterdrückt.

Für den Fall, daß aus irgendeinem Grund, weil z.B. der Befehlspuffer leergelaufen ist, auf den Befehl n in Stufe 2 zunächst kein weiterer Befehl n+1a folgt und das von der Stufe 3 ausgelöste Signal TRUESW bis zum Ende der Ausführung des Befehles n in Stufe 5 auf logisch Null bleibt, dann entfallen am Ausgang des UND-Gliedes U1 nach dem Setzen der Kippstufe M-FF2 die weiteren Taktimpulse und die Kippstufe M-FF2 wird bis zum Erscheinen des Signals TRUESW=1 nicht zurückgesetzt, so daß das UND-Glied 83 aufgesteuert bleibt. Das nach der Unterbrechung in der Stufe 2 für den ersten Folgebefehl anfallende Signal CH-AZ würde daher mit dem Taktimpuls CL1 in die Speicherkippstufe FF-A2 übernommen und wäre für die Auswertung verloren, weil erst der nachfolgende Taktimpuls CL4 die Umschaltung aufheben würde. Das UND-Glied 80 setzt in diesem Falle durch Auswerten der Signalkombination TRUESW M-FF2 CL4 die Kippstufe M-FF2 rechtzeitig wieder zurück.

Vergleicht man die beiden Lösungsvarianten von Fig. 5 und Fig. 8 miteinander, so unterscheiden sie sich im wesentlichen dadurch, daß bei dem Ausführungsbeispiel von Figur 5 die Ladezeitpunkte und die Gültigkeitsbereiche logisch voneinander getrennt sind, während beim Ausführungsbeispiel von Fig. 8 der Schiebetakt CL-FF beides festlegt. Die Anordnung von Fig. 5 ist daher leichter den jeweils gegebenen Fließbandbedingungen anpaßbar.

Ein weiterer Unterschied besteht in der Anzahl der vorgesehenen Speicherkippstufen für den Anzeigenänderungshinweis CH-AZ. Statt der vorgesehenen drei Speicherkippstufen bei der Anordnung von Fig. 5 könnten ebenfalls nur zwei Speicherkippstufen verwendet werden, da bei den gewählten Entscheidungszeitpunkten jeweils eine der drei Aussagen bereits für ungültig erklärt ist. Ebenso könnte bei der Anordnung von Fig. 8 eine weitere Schiebekippstufe der Kippstufe FF-B nachgeschaltet sein. Auch in diesem Falle steigert die größere Anzahl der Kippstufen die Anpassungsfähigkeit, da für die zu treffende Entscheidung nicht das Ende des jeweiligen Arbeitszyklus und damit die Anzeige des gerade ausgeführten Befehls abgewartet werden muß.

**Patentansprüche**

1. Anordnung zur Bearbeitung von Sprungbefehlen in nach dem Fließbandprinzip arbeitenden Datenverarbeitungsanlagen mit einem Befehlsaufbereitungsprozessor (PLU) für Befehlslesen (LB), Befehlsinterpretation (IP), Adressenrechner (AR) und Parameterbereitstellung (PB), mit einem Befehlsausführungsprozessor (EXU) für die eigentliche Befehlsausführung (AF) und mit einem gemeinsamen Puffer- und Arbeitsspeicher, wobei mit dem Befehlsdekodierer (IDEC) der Interpretationsstufe (IP) eine Anzeigenüberwachungseinrichtung (AZ-CONTROL) zur Zwischenspeicherung und Auswertung von bei der Interpretation eines jeden Befehls (z.B. n) gelieferten Anzeigenänderungshinweisen (CH-AZ) zwecks Erzeugung eines die bestehende Anzeige (AZ) für gültig erklärenden Steuersignales (AZV) gekoppelt ist und wobei in einer Sprungbefehlsauswerteeinrichtung (B-CONTROL) während der Interpretationsphase eines jeden bedingten Sprungbefehles bei Vorliegen des die bestehende Anzeige (AZ) für gültig erklärenden Steuersignales (AZV) der bedingte Sprungbefehl wie ein unbedingter Sprungbefehl behandelt und an Hand der Anzeige (AZ) überprüft wird, ob die Sprungbedingung erfüllt ist oder nicht, und der weitere Steuerungsablauf für die Befehlsaufbereitung entsprechend beeinflußt wird (Signale UNB.NERF, UNB.ERF), während bei noch veränderbarer Anzeige der einem bedingten Sprungbefehl entsprechende Steuerungsablauf beibehalten wird (Signal BED), gekennzeichnet durch

- eine vorgegebene Anzahl von Speicherkippstufen (z.B. MFF-A bis MFF-C) zur Speicherung jeweils eines der vom Befehlsdecodierer (IDEC) gelieferten Anzeigenänderungshinweise (CH-AZ),
- durch einen durch Steuerimpulse (CL-SELC) zyklisch fortschaltbaren Auswahlzähler (SELC) zur Auswahl jeweils einer der Speicherkippstufen (z.B. MFF-A) für die Übernahme eines vorliegenden Anzeigenänderungshinweises (CH-AZ) abhängig von einem gesonderten Speichertakt (CLM),
- durch ein an die Ausgänge der Speicherkippstufen (z.B. MFFa) angeschlossenes ODER-Glied (z.B. 015) mit invertiertem Ausgang, der das die vorliegende Anzeige (AZ) für gültig erklärende Steuersignal (AZV) liefert, und
- durch eine vorgeschaltete Steuereinrichtung (STE) zur Erzeugung der Steuerimpulse (CL-SELC und CL-M) für die Speicherkippstufen (MFF-A bis MFF-C) und den Auswahlzähler (SELC) abhängig von bei der Befehlsverarbeitung im Fließband jeweils anfallenden Steuersignalen (z.B. TRUESW, CL1, CL2 und CL4) und von der Sprungbefehlsauswerteeinrichtung (B-CONTROL) gelieferten und die Ausführung eines bedingten Sprungbefehles betreffenden Steuersignalen (BED, BED.NERF),
- einen Vorlaufzähler (PAC), dessen Zählerstand bei jedem von der Interpretationsstufe (IP) im Fließband weitergeleiteten Befehl durch einen von der vorgeschalteten Steuereinrichtung (STE) gelieferten Steuerimpuls (CL-PAC) um einen Schritt erhöht wird und bei jedem in der Ausführungsstufe (AF) beendeten Befehl um einen Schritt erniedrigt wird,
- durch einen jeder Speicherkippstufe (MFF-A bis MFF-C) individuell zugeordneten und durch den Auswahlzähler (SELC) ebenfalls auswählbaren Gültigkeitszähler (VAC-A bis VAC-C) zur Übernahme des jeweils vom Vorlaufzähler (PAC) bereitgestellten Zählerstandes (z.B. 3) abhängig von einem durch die vorgeschaltete Steuereinrichtung (STE) gelieferten Ladeimpuls (L-VAC), wobei die Ladezählerstände aller Gültigkeitszähler (VAC...) durch die dem Vorlaufzähler (PAC) zugeführten Rückzählimpulse ebenfalls schrittweise erniedrigt werden, und
- durch den Zählerstand der Gültigkeitszähler (VAC...) jeweils überwachende Schaltglieder (011 bis 013), die beim Zählerstand 0 die Ausgangssignale der zugehörigen Speicherkippstufen (z.B. MFF-A) sperren.

2. Anordnung zur Bearbeitung von Sprungbefehlen in nach dem Fließbandprinzip arbeitenden Datenverarbeitungsanlagen mit einem Befehlsaufbereitungsprozessor (PLU) für Befehlslesen (LB), Befehlsinterpretation (IP), Adressenrechner (AR) und Parameterbereitstellung (PB), mit einem Befehlsausführungsprozessor (EXU) für die eigentliche Befehlsausführung (AF) und mit einem gemeinsamen Puffer- und Arbeitsspeicher, wobei mit dem Befehlsdekodierer (IDEC) der Interpretationsstufe (IP) eine Anzeigenüberwachungseinrichtung (AZ-CONTROL) zur Zwischenspeicherung und Auswertung von bei der Interpretation eines jeden Befehls (z.B. n) gelieferten Anzeigenänderungshinweisen (CH-AZ) zwecks Erzeugung eines die bestehende Anzeige (AZ) für gültig erklärenden Steuersignales (AZV) gekoppelt ist und wobei in einer Sprungbefehlsauswerteeinrichtung (B-CONTROL) während der Interpretationsphase eines jeden bedingten Sprungbefehles bei Vorliegen des die bestehende Anzeige (AZ) für gültig erklärenden Steuersignales (AZV) der bedingte Sprungbefehl wie ein unbedingter Sprungbefehl behandelt und an Hand der Anzeige (AZ) überprüft wird, ob die Sprungbedingung erfüllt ist oder nicht, und der weitere Steuerungsablauf für die Befehlsaufbereitung entsprechend beeinflußt wird (Signale UNB.NERF, UNB.ERF), während bei noch veränderbarer Anzeige der einem bedingten Sprungbefehl entsprechende Steuerungsablauf beibehalten wird (Signal BED), gekennzeichnet durch

- eine vorgegebene Anzahl (z.B. zwei) von Speicherkippstufen (z.B. FF-A1 und FF-B), die zu einem durch Taktimpulse (CL-FF) getakteten Schieberegister in Reihe geschaltet sind, dessen Eingang die Anzeigenänderungshinweise (CH-AZ) zugeführt werden,
- durch ein an die Ausgänge der einzelnen Speicherkippstufen (FF-A1 und FF-B) angeschlossenes ODER-Glied (015) mit invertiertem Ausgang, der das die vorliegende Anzeige (AZ) für gültig erklärende Steuersignal (AZV) liefert,
- durch eine zur ersten Speicherkippstufe (FF-A1) der Schieberegisteranordnung parallel angeordnete weitere Speicherkippstufe (FF-A2),
- durch einen Auswahlschalter (MUX) zur Verbindung der ersten Speicherkippstufe (FF-A1) oder der dazu parallel angeordneten Kippstufe (FF-A2) mit der zweiten Kippstufe (FF-B) der Schieberegisteranordnung,
- durch eine Umsteuereinrichtung (U82, U83) zur Umschaltung des anstehenden Anzeigenänderungshinweises (CH-AZ) auf den Eingang der zur ersten Kippstufe der Schieberegisteranordnung parallel angeordneten Kippstufe (FF A2) abhängig von einem Umschaltesteuersignal (SEL) und
- durch eine vorgeschaltete Steuereinrichtung (STE') zur Erzeugung der Taktimpulse (CL-FF) und des Umschaltesteuersignals (SEL) abhängig von bei der Befehlsverarbeitung im Fließband jeweils anfallenden Steuersignalen (z.B. TRUESW, CL1, CL4) und von von der Sprungbefehlsauswerteeinrichtung (B-CONTROL) gelieferten und die Ausführung eines bedingten Sprungbefehles (n) betreffenden Steuersignalen (BED, BED.NERF).

3. Anordnung nach einem der Ansprüche 1 oder 2, dadurch gekennzeichnet, daß
- die vorgeschaltete Steuereinrichtung (STE bzw. STE') eine Reihe von in Reihe geschalteten Merkkippstufen (M-FF1 bis M-FF4 bzw. M-FF1 bis M-FF3) aufweist,

- daß das die Ausführung eines bedingten Sprungbefehles anzeigende Steuersignal (BED) der ersten Merkkippstufe (M-FF1) zugeführt und von dieser gleichzeitig mit der von der auf die Interpretationsstufe (IP) folgenden Verarbeitungsstufe (AR) erfolgenden Behandlung des zugehörigen Sprungbefehles (n) gespeichert wird,
- daß das in der ersten Merkkippstufe (M-FF1) gespeicherte Steuersignal (BED) jeweils mit jedem von der auf die Interpretationsstufe (IP) folgenden Verarbeitungsstufe (AR) in Behandlung genommenen Folgebefehl (z.B. n+la) synchron mit den Arbeitszyklen (EOZ) des Fließbandes von Merkkippstufe (z.B. M-FF2) zu Merkkippstufe (z.B. M-FF3) weitergeleitet wird und
- daß Verknüpfungsschaltglieder abhängig vom jeweiligen Setzzustand der zweiten und restlichen Merkkippstufen (z.B. M-FF2 und M-FF3) die für die Ansteuerung der Speicherkippstufen (z.B. FF-A1 und FF-B) benötigten Takt- und Steuersignale in der jeweils benötigten Folge liefern.

## Claims

1. Arrangement for processing branch instructions in pipelined data processing systems comprising an instruction editing processor (PLU) for instruction reading (LB), instruction interpretation (IP), address computer (AR) and parameter provision (PB), with an instruction execution processor (EXU) for the actual instruction execution (AF) and with a common buffer and main memory, the instruction decoder (IDEC) of the interpretation stage (IP) being coupled to an indicator monitoring device (AZ-CONTROL) for temporarily storing and evaluating indicator change indications (CH-AZ) supplied during the interpretation of each instruction (for example n) for the purpose of generating a control signal (AZV) declaring the existing indicator (AZ) as valid, the conditional branch instruction being treated like an unconditional branch instruction in the presence of the control signal (AZV) declaring the existing indicator (AZ) as valid during the interpretation phase of each conditional branch instruction in a branch instruction evaluating device (B-CONTROL) and the indicator (AZ) being used for checking whether the branch condition has been satisfied or not, and the further control sequence for instruction editing being correspondingly influenced (UNB.NERF, UNB.ERF signals), whilst the control sequence corresponding to a conditional branch instruction (BED signal) is maintained when the indicator can still be changed, characterized by
- a predetermined number of storage flip-flops, for example (MFF-A to MFF-C) for storing in each case one of the indicator change indications (CH-AZ) supplied by the instruction decoder (IDEC),
- by a selection counter (SELC), which can be cyclically stepped on by control pulses (CL-SELC) for selecting in each case one of the storage flip-flops (for example MFF-A) for transferring an available indicator change indication (CH-AZ) in dependence on a separate storage clock (CLM),

- by an OR gate (for example 015), which is connected to the outputs of the storage flip-flops (for example MFFa), with inverted output which supplies the control signal (AZV) declaring the present indicator (AZ) as valid, and
- by a preceding control device (STE) for generating the control pulses (CL-SELC and CL-M) for the storage flip-flops (MFF-A to MFF-C) and the selection counter (SELC) in dependence on control signals (for example TRUESW, CL1, CL2 and CL4) in each case present during the pipelined instruction processing and control signals (BED, BED.NERF), supplied by the evaluating device (B-CONTROL) and relating to the execution of a conditional branch instruction,
- an advance counter (PAC) the count of which is incremented by one step by a control pulse (CL-PAC) supplied by the preceding control device (STE) with each instruction forwarded by the interpretation stage (IP) in the pipeline and is decremented by one step with each instruction terminated in the execution stage (AF),
- by a validity counter (VAC-A to VAC-C) which is individually associated with each storage flip-flop (MFF-A to MFF-C) and can also be selected by the selection counter (SELC) for transferring the count (for example 3) in each case provided by the advance counter (PAC) in dependence on a load pulse (L-VAC) supplied by the preceding control device (STE), the load counts of all validity counters (VAC...) also being decremented step by step by the count-down pulses supplied to the advance counter (PAC) and
- by switching elements (011 to 013) in each case monitoring the count of the validity counters (VAC...), which inhibit the output signals of the associated storage flip-flops (for example MFF-A) with a count of 0.

2. Arrangement for processing branch instructions in pipelined data processing systems comprising an instruction editing processor (PLU) for instruction reading (LB), instruction interpretation (IP), address computer (AR) and parameter provision (PB), with an instruction execution processor (EXU) for the actual instruction execution (AF) and with a common buffer and main memory, the instruction decoder (IDEC) of the interpretation stage (IP) being coupled to an indicator monitoring device (AZ-CONTROL) for temporarily storing and evaluating indicator change indications (CH-AZ) supplied during the interpretation of each instruction (for example n) for the purpose of generating a control signal (AZV) declaring the existing indicator (AZ) as valid, the conditional branch instruction being treated like an unconditional branch instruction in the presence of the control signal (AZV) declaring the existing indicator (AZ) as valid during the interpretation phase of each conditional branch instruction in a branch instruction evaluating device (B-CONTROL) and the indicator (AZ) being used for checking whether the branch condition has been satisfied or not, and the further control sequence for instruction editing being correspondingly influenced (UNB.NERF, UNB.ERF signals), whilst the control sequence corresponding to a conditional branch instruction (BED signal) is maintained when the indicator can still be changed, characterized by

- a predetermined number (for example two) of storage flip-flops (for example FF-A1 and FF-B) which are connected in series to form a shift register clocked by clock pulses (CL-FF), the input of which is supplied with the indicator change indications (CH-AZ),
- by an OR gate (015) connected to the outputs of the individual storage flip-flops (FF-A1 and FF-B) with inverted output which supplies the control signal (AZV) declaring the present indicator (AZ) as valid,
- by a further storage flip-flop (FF-A2) arranged in parallel with the first storage flip-flop (FF-A1) of the shift register arrangement,
- by a selection switch (MUX) for connecting the first storage flip-flop (FF-A1) or the flip-flop (FF-A2) arranged in parallel therewith to the second flipflop (FF-B) of the shift register arrangement,
- by a rerouting device (U82, U83) for switching the indicator change indication (CH-AZ) present to the input of the flip-flop (FF A2) arranged in parallel with the first flip-flop of the shift register arrangement in dependence on a switching control signal (SEL) and
- by a preceding control device (STE') for generating the clock pulses (CL-FF) and the switching control signal (SEL) in dependence on control signals (for example TRUESW, CL1, CL4) in each case produced during the instruction processing in the pipeline and on control signals (BED, BED.NERF) supplied by the branch instruction evaluating device (B-CONTROL) and relating to the execution of a conditional branch instruction (n).

3. Arrangement according to one of Claims 1 or 2, characterized in that
- the preceding control device (STE and STE') exhibits a number of series-connected marking flip-flops (MFF1 to M-FF4 and M-FF1 to M-FF3),
- that the control signal (BED) indicating the execution of a conditional branch instruction is supplied to the first marking flip-flop (M-FF1) and is stored by the latter at the same time as the associated branch instruction (n) is processed by the processing stage (AR) following the interpretation stage (IP),
- that the control signal (BED) stored in the first marking flip-flop (M-FF1) is in each case forwarded from marking flip-flop (for example M-FF2) to marking flip-flop (for example M-FF3) synchronously with the operating cycles (EOZ) of the pipeline with each subsequent instruction (for example n+1a) being processed by the processing stage (AR) following the interpretation stage (IP), and
- that combinatorial circuit elements supply the clock and control signals needed for driving the storage flip-flops (for example FF-A1 and FF-B) in the sequence needed in each case, in dependence on the respective set stage of the second and remaining marking flip-flops (for example M-FF2 and M-FF3).

## Revendications

1. Dispositif pour traiter des instructions de saut dans des installations de traitement de données travaillant en mode pipeline et comportant un processeur (PLU) de préparation des instructions pour la lecture d'instructions (LB), l'interprétation d'instructions (IP), le calcul d'adresses (AR) et la préparation de paramètres (PB), un processeur d'exécution d'instructions (EXU) pour l'exécution proprement dite (AF) des instructions et une mémoire tampon et de travail commune, et dans lequel un dispositif de contrôle d'indication (AZ-CONTROL) qui sert à mémoriser temporairement et évaluer des notifications (CH-AZ) de modification d'indications délivrées lors de l'interprétation de chaque instruction (par exemple n), est accouplé au décodeur d'instructions (IDEC) de l'étage d'interprétation (IP) pour la production d'un signal de commande (AZV) signalant que l'indication existante (AZ) est valable, et dans lequel, pendant la phase d'interprétation de chaque instruction de saut conditionnel, lors de la présence du signal de commande (AZV) indiquant que l'indication existante (AZ) est valable, l'instruction de saut conditionnel est traitée dans un dispositif (B-CONTROL) d'évaluation des instructions de saut, comme une instruction de saut inconditionnel et qu'un contrôle est effectué sur la base de l'indication (AZ) pour savoir si la condition de saut est satisfaite ou non, et la poursuite du cycle de commande pour la préparation des instructions est influencée de façon correspondante (signaux UNB.NERF, UNB. ERF) alors que dans le cas d'un affichage encore variable, le cycle de commande correspondant à une instruction de saut conditionnel est conservé (signal BED), caractérisé par

– un nombre prédéterminé d'étages à bascules de mémoire (par exemple MFF-A à MFF-C) servant à mémoriser respectivement l'une des notifications (CH-AZ) de modification d'indication, délivrées par le décodeur d'instructions (IDEC),

– un compteur de sélection (SELC), que peuvent faire avancer cycliquement des impulsions de commande (CL-SELC) et qui sert à sélectionner respectivement l'un des étages à bascule de mémoire (par exemple MFF-A) pour le transfert d'une notification présente (CH-AZ) de modification d'indication, en fonction d'une cadence de mémoire particulière (CNM),

– un circuit OU (par exemple 015) raccordé aux sorties des étages à bascule de mémoire (par exemple MFFa) et comportant une sortie inversée, qui délivre le signal de commande (AZV) signalant que l'indication présente (AZ) est valable, et

– un dispositif de commande (STE) branché en amont et servant à commander une impulsion de commande (CL-SELC et CL-M) pour les étages à bascule de mémoire (MFF-A à MFF-C) et le compteur de sélection (SELC), en fonction de signaux de commande (par exemple TRUESW, CL1, CL2 et CL4) apparaissant respectivement lors du traitement des instructions en mode pipeline, et de signaux de commande (BED, BED.NERF) délivrés par le dispositif (B-CONTROL) d'évaluation d'instructions de saut et concernant l'exécution d'une instruction de saut conditionnelle,

– un compteur progressif (PAC), dont l'état de comptage est accru d'un pas lors de chaque instruction retransmise par l'étage d'interprétation (IP) dans le mode pipeline, par une impulsion de commande (CL-PAC) délivrée par le dispositif de commande (STE) branché en amont et est réduit d'un pas lors de chaque instruction se terminant dans l'étage d'exécution (AF),

– un compteur de validité (VAC-A à VAC-C), qui est associé individuellement à chaque étage à bascule de mémoire (MFF-A à MFF-C), peut être également sélectionné par le compteur de sélection (SELC) et sert à transférer l'état du compteur (par exemple 3) préparé respectivement par le compteur progressif (PAC), en fonction d'une impulsion de charge (L-VAC) délivrée par le dispositif de commande (STE) branché en amont, les états du compteur de charge de tous les compteurs de validité (VAC...) étant réduits également pas-à-pas par les impulsions de comptage régressif envoyées au compteur progressif (PAC),

– des circuits de commutation (011 à 013), qui contrôlent respectivement l'état de comptage du compteur de validité (VAC...) et, dans le cas où l'état du compteur est 0, bloquent les signaux de sortie des étages à bascule de mémoire associés (par exemple MFF-A).

2. Dispositif pour traiter des instructions de saut dans des installations de traitement de données travaillant en mode pipeline et comportant un processeur (PLU) de préparation des instructions pour la lecture d'instructions (LB), l'interprétation d'instructions (IP), le calcul d'adresses (AR) et la préparation de paramètres (PB), un processeur d'exécution d'instructions (EXU) pour l'exécution proprement dite (AF) des instructions et une mémoire tampon et de travail commune, et dans lequel un dispositif de contrôle d'indication (AZ-CONTROL) qui sert à mémoriser temporairement et évaluer des notifications (CH-AZ) de modification d'indications délivrées lors de l'interprétation de chaque instruction (par exemple n), est accouplé au décodeur d'instructions (IDEC) de l'étage d'interprétation (IP) pour la production d'un signal de commande (AZV) signalant que l'indication existante (AZ) est valable, et dans lequel, pendant la phase d'interprétation de chaque instruction de saut conditionnel, lors de la présence du signal de commande (AZV) indiquant que l'indication existante (AZ) est valable, l'instruction de saut conditionnel est traitée dans un dispositif (B-CONTROL) d'évaluation des instructions de saut, comme une instruction de saut inconditionnel et qu'un contrôle est effectué sur la base de l'indication (AZ) pour savoir si la condition de saut est satisfaite ou non, et la poursuite du cycle de commande pour la préparation des instructions est influencée de façon correspondante (signaux UNB.NERF, UNB.ERF) alors que dans le cas d'un affichage encore variable, le cycle de commande correspondant à une instruction de saut conditionnel est conservé (signal BED), caractérisé par

– un nombre prédéterminé (par exemple deux) d'étages à bascule de mémoire (par exemple FF-A1, FF-B), qui sont branchés en série avec un registre à décalage commandé de façon cadencée par des impulsions de cadence (CL-FF) et à l'entrée duquel sont envoyées les notifications (CH-AZ) de modification d'indication,
– un circuit OU (015) raccordé aux sorties des différents étages à bascule de mémoire (FF-A1 et FF-B) et comportant une sortie inversée, qui délivre le signal de commande (AZV) indiquant que la notification présente (AZ) est valable,
– un autre étage à bascule de mémoire (FF-A2) branché en parallèle avec le premier étage à bascule de mémoire (FF-A1) du dispositif à registre à décalage,
– un commutateur de sélection (MUX) servant à relier le premier étage à bascule de mémoire (FF-A1) ou l'étage à bascule (FF-A2) branché en parallèle avec cet étage, au second étage à bascule (FF-B) du dispositif à registres à décalage,
– un dispositif de commutation (U82, U83) servant à commuter la notification présente (CH-AZ) de modification d'indication à l'entrée de l'étage à bascule (FF-A2) branché en parallèle avec le premier étage à bascule du dispositif à registres à décalage, en fonction d'un signal de commande de commutation (SEL), et
– un dispositif de commande (STE') branché en amont et servant à commander les impulsions de cadence (CL-FF) et le signal de commande de commutation (SEL) en fonction de signaux de commande (par exemple TRUESW, CL1, CL4) intervenant respectivement lors du traitement d'instructions en mode pipeline, et deux signaux de commande (BED, BED.NERF) délivrés par le dispositif (B-CONTROL) de sélection d'instructions de saut et concernant l'exécution d'une instruction de saut conditionnel (n).

3. Dispositif suivant l'une des revendications 1 ou 2, caractérisé par le fait que
– le dispositif de commande (STE ou STE') branché en amont comporte une série d'étages à bascule de marquage (M-FF1 à M-FF4 ou M-FF1 à M-FF3) branchés en série,
– que le signal de commande (BED) indiquant l'exécution d'une instruction de saut conditionnel est envoyé au premier étage à bascule de marquage (N-FF1) et est mémorisé par ce dernier en même temps que le traitement de l'instruction de saut associée (n), qui est exécuté par l'étage de traitement (AR) branché en aval de l'étage d'interprétation (IP),
– que le signal de commande (BED) mémorisé dans le premier étage à bascule de marquage (M-FF1) est retransmis respectivement avec l'instruction suivante (par exemple n + 1a) qui est traitée par l'étage de traitement (AR) succédant à l'étage d'interprétation (IP), en synchronisme avec les cycles de travail (EOZ) de la chaîne de traitement en mode pipeline, d'un étage à bascule de marquage (par exemple MFF2) à l'étage à bascule de marquage (par exemple M-FF3), et
– que des circuits combinatoires délivrent, en fonction de l'état respectif de positionnement du second étage à bascule de marquage et de l'étage à bascule de marquage restant (par exemple M-FF2 et M-FF3), les signaux de cadence et de commande nécessaires pour la commande des étages à bascule de mémoire (par exemple FF-A1 et FF-B) selon la séquence respectivement nécessaire.

## FIG 1

**A**

1. LB        BALR
2. IP   n-3 n-2 n-1 n n+1a n+2a ...
3. AR      n-3 n-2 n-1 n n+1a --
4. PB        n-3 n-2 n-1 n n+1a ...
5. AF    --   n-3 n-2 n-1 n n+1a --

**B**

1. LB        BALR    n+1b
2. IP   n-3 n-2 n-1 n      n+1b n+2b --
3. AR       n-1 n     n+1b --
4. PB       n-1 n     n+1b --
5. AF   --    n-1 n     n+1b --

$V = 2EOZ$

**C**

1. LB      B C    n+1b
2. IP   n-3 n-2 n-1 n n+1a    n+2a n+3a --
3. AR      n-1 n n+1a    n+2a --
4. PB       n-1 n n+1a    n+2a --
5. AF   --    n-1 n n+1a   n+2a --

            E       $V = 1EOZ$

**D**

1. LB      B C    n+1b
2. IP   n-3 n-2 n-1 n n+1a   n+1b n+2b --
3. AR       n n+1a    n+1b --
4. PB        n     n+1b --
5. AF   --    n-2 n-1 n    n+1b --

           $V$   2EOZ

EOZ   1   2   3   4   5   6   7   8   9   10   11

                  E

# FIG 3

BCR

| O P | M | R 2 |
|-----|---|-----|

0         7   8     11   12     15

| O P | M | X 2 | B 2 | D 2 |
|-----|---|-----|-----|-----|

0         7   8     11   12     15   16     19   20                 31

BC

# FIG 2

FIG 4

FIG 5a

EP 0 239 023 B1

FIG 5b

EP 0 239 023 B1

# FIG 6

EP 0 239 023 B1

FIG 7

FIG 8

FIG 9

# FIG 10

| | | BC | | n + 1b | | | | |
|---|---|---|---|---|---|---|---|---|

1.LB

2. IP  n-1 | n | n +1a | | n +1b | n +2b | n +3b | n +4b

3.AR  n-2 | n-1 | n | n +1a | | n+ 1b | n +2b | n + 3b

4.PB  n-3 | n-2 | n-1 | n | | | n+ 1b | n + 2b

5.AF  n-4 | n-3 | n-2 | n-1 | n | | | n + 1b

BED

M-FF1

M-FF2

M-FF3

BED. NERF

EOZ  | 1 | 2 | 3 | 4 | 5 | 6 | 7 | 8 |

CL...  |1|2|3|4|1|2|3|4|1|2|3|4|1|2|3|4|1|2|3|4|1|2|3|4|1|2|3|4|1|2|3|4|

CL-FF

FF-A1  AZ(n-2) AZ(n-1) AZ(n) 0 AZ(n+1b) AZ(n+2b) AZ(n+3b)

FF-A2  0 0 0 AZ(n+ 1a) 0 0 0

FF-B  AZ(n-3) AZ(n-2) AZ(n-1) AZ(n) 0 AZ(n+1b) AZ(n+2b)

E